(19)

Europäisches
Patentamt
European
Patent Office
Office européen
des brevets

(11) **EP 4 333 093 A1**

(12) **EUROPEAN PATENT APPLICATION**
published in accordance with Art. 153(4) EPC

(43) Date of publication:
**06.03.2024 Bulletin 2024/10**

(21) Application number: **22795537.4**

(22) Date of filing: **31.03.2022**

(51) International Patent Classification (IPC):
*H01M 4/13* (2010.01)        *H01M 50/443* (2021.01)
*H01M 50/449* (2021.01)      *H01M 50/463* (2021.01)
*H01M 50/489* (2021.01)

(52) Cooperative Patent Classification (CPC):
**H01M 4/13; H01M 50/443; H01M 50/449;**
**H01M 50/463; H01M 50/489;** Y02E 60/10;
Y02P 70/50

(86) International application number:
**PCT/JP2022/016947**

(87) International publication number:
**WO 2022/230621 (03.11.2022 Gazette 2022/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.04.2021   JP 2021076625**

(71) Applicant: **Zeon Corporation**
**Tokyo 100-8246 (JP)**

(72) Inventors:
• **SATO Masanobu**
  **Tokyo 100-8246 (JP)**
• **UMESATO Toshiyuki**
  **Tokyo 100-8246 (JP)**

(74) Representative: **Maiwald GmbH**
**Elisenhof**
**Elisenstraße 3**
**80335 München (DE)**

(54) **MULTILAYER BODY FOR NONAQUEOUS SECONDARY BATTERIES, BONDING COMPOSITION, AND NONAQUEOUS SECONDARY BATTERY**

(57)    Provided is a laminate for a non-aqueous secondary battery that has strong adhesion between an electrode and a separator and is capable of forming a non-aqueous secondary battery having excellent output characteristics. The laminate for a non-aqueous secondary battery includes an electrode and a separator that are adhered via an adhesive layer. The adhesive layer is a dried product of a composition for adhesion that contains a particulate polymer. A relationship between the composition for adhesion and at least one of the electrode and the separator satisfies the following formula (1): $20 \leq$ remaining proportion of coating liquid (%) $\leq 100$.

EP 4 333 093 A1

**Description**

TECHNICAL FIELD

The present disclosure relates to a laminate for a non-aqueous secondary battery, a composition for adhesion, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. A secondary battery generally includes battery members such as a positive electrode, a negative electrode, and a separator that isolates the positive electrode and the negative electrode from each other and prevents short-circuiting between the positive and negative electrodes.

In a production process of a secondary battery, an electrode and a separator that have not yet been immersed in electrolyte solution may be pressure bonded to obtain a laminate (hereinafter, also referred to as a "laminate for a secondary battery"), and then this laminate may, as necessary, be cut to a desired size or be stacked, folded, or wound.

As one example of a technique relating to a laminate for a secondary battery, Patent Literature (PTL) 1 discloses a laminate for a secondary battery that is obtained by adhering an electrode and a separator via an adhesive material. The adhesive material is obtained by applying a slurry for a non-aqueous secondary battery containing a particulate polymer having a core-shell structure, a specific amount of a polyhydric alcohol compound, and water onto the electrode by an inkjet method and then drying the slurry for a non-aqueous secondary battery.

As another example, PTL 2 discloses a laminate for a secondary battery that is obtained by adhering an electrode and a separator via an adhesive layer. The adhesive layer is obtained by applying a composition for an adhesive layer that contains organic particles having a core-shell structure, a thixotropic agent, and water and that satisfies specific properties onto a porous membrane layer-equipped separator by an inkjet method and then drying the composition for an adhesive layer.

CITATION LIST

Patent Literature

PTL 1: WO2019/221056A1
PTL 2: WO2020/045246A1

SUMMARY

(Technical Problem)

It is desirable that a laminate for a secondary battery has strong adhesion between an electrode and a separator and is capable of forming a secondary battery having excellent battery characteristics such as output characteristics. However, in the case of a laminate for a secondary battery obtained according to the conventional techniques described above, there is room for further improvement in terms of simultaneously achieving all of the above-described attributes to high levels.

Accordingly, one object of the present disclosure is to provide a laminate for a non-aqueous secondary battery that has strong adhesion between an electrode and a separator and is capable of forming a secondary battery having excellent output characteristics.

Another object of the present disclosure is to provide a composition for adhesion that can suitably be used as a material forming an adhesive layer of a presently disclosed laminate for a non-aqueous secondary battery.

Yet another object of the present disclosure is to provide a secondary battery having excellent battery characteristics such as output characteristics.

(Solution to Problem)

The inventors conducted diligent investigation with the aim of solving the problems described above. The inventors discovered that in a situation in which a composition for adhesion that forms an adhesive layer adhering an electrode and a separator in a laminate for a non-aqueous secondary battery satisfies a specific relationship with at least one of the electrode and the separator, the electrode and the separator are strongly adhered, and this laminate for a non-aqueous secondary battery is capable of forming a secondary battery having excellent output characteristics. In this manner, the inventors completed the present disclosure.

Specifically, the present disclosure aims to advantageously solve the problem set forth above, and a presently disclosed laminate for a non-aqueous secondary battery comprises an electrode and a separator that are adhered via an adhesive layer, wherein the adhesive layer is a dried product of a composition for adhesion that contains a particulate polymer, and a relationship between the composition for adhesion and at least one of the electrode and the separator satisfies formula (1), shown below.

$$20 \leq \text{Remaining proportion of coating liquid (\%)} \leq 100 \cdots \text{Formula (1)}$$

In formula (1), remaining proportion of coating liquid (%) is determined by formula (2), shown below.

$$\text{Remaining proportion of coating liquid (\%)} = C(\text{substrate})/C(\text{PET}) \times 100 \cdots \text{Formula (2)}$$

In formula (2): C(PET) is volume of the composition for adhesion remaining on a polyethylene terephthalate substrate at a drying completion point at which volume change of the composition for adhesion reaches saturation when volume change of the composition for adhesion on the polyethylene terephthalate substrate is measured over time after 1,000 pL of the composition for adhesion is dripped onto the polyethylene terephthalate substrate; and C(substrate) is volume of the composition for adhesion remaining on the electrode or the separator when the drying completion point is reached after 1,000 pL of the composition for adhesion is dripped onto the electrode or the separator.

The laminate for a non-aqueous secondary battery in which a relationship between the composition for adhesion and at least one of the electrode and the separator satisfies the preceding formula (1) in this manner has strong adhesion between the electrode and the separator and is capable of forming a non-aqueous secondary battery having excellent output characteristics.

Note that "C(PET)" and "C(substrate)" referred to in the present disclosure can be determined according to a method described in the EXAMPLES section of the present specification.

Moreover, the present disclosure aims to advantageously solve the problem set forth above, and a presently disclosed laminate for a non-aqueous secondary battery comprises an electrode and a separator that are adhered via an adhesive layer, wherein the adhesive layer is a dried product of a composition for adhesion that contains a particulate polymer, and a relationship between a particle size distribution (D90) of the composition for adhesion and at least one of surface roughness (Sa) of the electrode and surface roughness (Sa) of the separator satisfies formula (3), shown below.

$$\text{Particle size distribution (D90) of composition for adhesion } [\mu m] - \text{Surface roughness (Sa) of electrode } [\mu m] \text{ or Surface roughness (Sa) of separator } [\mu m] > -0.25 \cdots \text{Formula (3)}$$

The laminate for a non-aqueous secondary battery in which a relationship between the particle size distribution (D90) [μm] of the composition for adhesion and at least one of surface roughness (Sa) [μm] of the electrode and surface roughness (Sa) [μm] of the separator satisfies the preceding formula (3) in this manner has strong adhesion between the electrode and the separator and is capable of forming a non-aqueous secondary battery having excellent output characteristics.

Note that the "particle size distribution (D90) of a composition for adhesion", "surface roughness (Sa) of an electrode", and "surface roughness (Sa) of a separator" referred to in the present disclosure can be measured according to methods described in the EXAMPLES section of the present specification.

In the presently disclosed laminate for a non-aqueous secondary battery, it is preferable that the adhesive layer is formed of a plurality of dot-like adhesive layers, dot diameter per one of the dot-like adhesive layers is 200 μm or more, and the dot-like adhesive layers have a crater-like uneven shape. The laminate for a non-aqueous secondary battery in which the adhesive layer is formed of a plurality of dot-like adhesive layers, the dot diameter per one dot-like adhesive layer is 200 μm or more, and the dot-like adhesive layers have a crater-like uneven shape in this manner has even stronger adhesion between the electrode and the separator and is capable of forming a non-aqueous secondary battery having further improved output characteristics.

Note that the "dot diameter" referred to in the present disclosure can be measured according to a method described in the EXAMPLES section of the present specification.

Furthermore, the present disclosure aims to advantageously solve the problem set forth above, and a presently disclosed composition for adhesion comprises a particulate polymer and is used for any one of the laminates for a non-aqueous secondary battery set forth above, wherein the particulate polymer has a core-shell structure including a core portion and a shell portion partially covering an outer surface of the core portion.

In the presently disclosed composition for adhesion, the particulate polymer may include two or more particulate polymers having different volume-average particle diameters, and at least one of the particulate polymers may have the core-shell structure.

The composition for adhesion that contains a particulate polymer having a core-shell structure including a core portion and a shell portion partially covering an outer surface of the core portion in this manner can suitably be used as a material for forming an adhesive layer that strongly adheres an electrode and a separator in a laminate for a non-aqueous secondary battery.

Also, the present disclosure aims to advantageously solve the problem set forth above, and a presently disclosed non-aqueous secondary battery comprises any one of the laminates for a non-aqueous secondary battery set forth above. The presently disclosed non-aqueous secondary battery has excellent battery characteristics such as output characteristics as a result of including the laminate for a non-aqueous secondary battery set forth above.

(Advantageous Effect)

According to the present disclosure, it is possible to provide a laminate for a non-aqueous secondary battery that has strong adhesion between an electrode and a separator and is capable of forming a non-aqueous secondary battery having excellent output characteristics.

Moreover, according to the present disclosure, it is possible to provide a composition for adhesion that can suitably be used as a material forming an adhesive layer of the presently disclosed laminate for a non-aqueous secondary battery.

Furthermore, according to the present disclosure, it is possible to provide a non-aqueous secondary battery having excellent battery characteristics such as output characteristics.

BRIEF DESCRIPTION OF THE DRAWINGS

In the accompanying drawings:

FIG. 1A is a plan view schematically illustrating one example of an adhesive layer of a laminate for a non-aqueous secondary battery in accordance with the present disclosure;
FIG. 1B is a cross-sectional view at a line A-A indicated in FIG. 1A; and
FIG. 2 is an explanatory diagram illustrating a production process of a laminate for a non-aqueous secondary battery in examples and comparative examples.

DETAILED DESCRIPTION

The following provides a detailed description of embodiments of the present disclosure.

A presently disclosed laminate for a non-aqueous secondary battery can be used in production of a non-aqueous secondary battery such as a lithium ion secondary battery, for example. Moreover, a presently disclosed composition for adhesion can be used as a material forming an adhesive layer that adheres an electrode and a separator in a laminate for a non-aqueous secondary battery. Furthermore, a presently disclosed non-aqueous secondary battery includes the presently disclosed laminate for a non-aqueous secondary battery.

(Laminate for non-aqueous secondary battery)

The presently disclosed laminate for a non-aqueous secondary battery is a laminate for a non-aqueous secondary battery that includes an electrode and a separator and in which the electrode and the separator are adhered via an adhesive layer.

Moreover, in the presently disclosed laminate for a non-aqueous secondary battery, the adhesive layer that adheres the electrode and the separator is a dried product of a composition for adhesion that contains a particulate polymer, and a relationship between the composition for adhesion and at least one of the electrode and the separator satisfies the following formula (1).

$$20 \leq \text{Remaining proportion of coating liquid (\%)} \leq 100 \cdots \text{Formula (1)}$$

The remaining proportion of coating liquid (%) in formula (1) is determined by the following formula (2).

$$\text{Remaining proportion of coating liquid (\%)} = C(\text{substrate})/C(\text{PET}) \times 100 \cdots \text{Formula (2)}$$

In formula (2), C(PET) is the volume of the composition for adhesion remaining on a polyethylene terephthalate substrate at a drying completion point at which volume change of the composition for adhesion reaches saturation when volume change of the composition for adhesion on the polyethylene terephthalate substrate is measured over time after 1,000 pL of the composition for adhesion is dripped onto the polyethylene terephthalate substrate. Moreover, C(substrate) is the volume of the composition for adhesion remaining on the electrode or the separator when the drying completion point is reached after 1,000 pL of the composition for adhesion is dripped onto the electrode or the separator.

Moreover, in the presently disclosed laminate for a non-aqueous secondary battery, a relationship between a particle size distribution (D90) of the composition for adhesion and at least one of surface roughness (Sa) of the electrode and surface roughness (Sa) [μm] of the separator satisfies the following formula (3).

$$\text{Particle size distribution (D90) of composition for adhesion [μm]} - \text{Surface roughness (Sa) of electrode [μm] or Surface roughness (Sa) of separator [μm]} > -0.25 \cdots \text{Formula (3)}$$

The presently disclosed laminate for a non-aqueous secondary battery has strong adhesion between the electrode and the separator and is capable of forming a secondary battery having excellent output characteristics as a result of satisfying the relationship in formula (1) and/or formula (3). Moreover, by using the presently disclosed laminate for a non-aqueous secondary battery in a secondary battery, it is possible to inhibit deposition of metal such as lithium (Li) at an electrode surface during charging of the secondary battery.

Although it is not clear why the presently disclosed laminate for a non-aqueous secondary battery has strong adhesion between the electrode and the separator and is capable of forming a secondary battery having excellent output characteristics and why deposition of metal such as lithium (Li) at an electrode surface during charging of a secondary battery can be inhibited by using the presently disclosed laminate for a non-aqueous secondary battery in a secondary battery, the reason for this is presumed to be as follows.

In the presently disclosed laminate for a secondary battery, the adhesive layer that adheres the electrode and the separator is formed of a dried product of a composition for adhesion that contains a particulate polymer. Consequently, a coffee stain effect that arises during drying of the composition for adhesion causes concentrated deposition of the particulate polymer at a peripheral part of the adhesive layer, thereby increasing the thickness of the peripheral part of the adhesive layer and decreasing the thickness of a central part of the adhesive layer. In other words, as a result of a larger amount of the particulate polymer collecting at the peripheral part and a smaller amount of the particulate polymer being present at the central part, the adhesive layer that is a dried product of the composition for adhesion containing the particulate polymer has an uneven shape in which the peripheral part has a raised shape and the central part has a depressed shape. As a result of the adhesive layer having a higher height at the peripheral part having a raised shape, the electrode and the separator are strongly adhered via the adhesive layer. Moreover, it is presumed that as a result of metal ions such as lithium ions more easily passing through the adhesive layer due to only a small amount of the particulate polymer being present in the central part having a depressed shape, it is possible to inhibit deposition of metal such as lithium at an electrode surface during charging in a secondary battery that includes this laminate for a non-aqueous secondary battery.

In the presently disclosed laminate for a non-aqueous secondary battery, the remaining proportion of coating liquid is preferably 50% or more, more preferably 70% or more, and preferably 80% or more from a viewpoint of more strongly adhering the electrode and the separator.

Moreover, in the presently disclosed laminate for a non-aqueous secondary battery, the value of "particle size distribution (D90) of composition for adhesion - surface roughness (Sa) of electrode [μm] or surface roughness (Sa) of separator [μm]" (hereinafter, also referred to simply as "D90 - Sa") is preferably 0.1 or more, and more preferably 0.2 or more from a viewpoint of more strongly adhering the electrode and the separator.

Note that the remaining proportion of coating liquid can be controlled by altering the volume-average particle diameter of the particulate polymer that is contained in the composition for adhesion, the surface roughness of the electrode or the separator, the drying temperature during formation of the adhesive layer through drying of the composition for adhesion, and so forth.

Moreover, the particle size distribution (D90) of the composition for adhesion can be controlled by altering the volume-average particle diameter of the particulate polymer that is contained in the composition for adhesion, the amount of the particulate polymer that is contained in the composition for adhesion, and so forth.

Furthermore, the surface roughness (Sa) [μm] of the electrode can be adjusted mainly through control of the surface roughness of a roll in pressing and the density of the electrode after pressing. Also, the surface roughness (Sa) [μm] of the separator can be adjusted, for example, through selection of the particle diameter of a ceramic that is used in the case of a separator that is coated with a ceramic as a heat-resistant layer.

The electrode that is included in the presently disclosed laminate for a non-aqueous secondary battery may be just a positive electrode, just a negative electrode, or both a positive electrode and a negative electrode. Moreover, in a case in which both a positive electrode and a negative electrode are adhered to a separator to obtain the laminate for a non-aqueous secondary battery, the number of positive electrodes, the number of negative electrodes, and the number of separators included in the laminate for a non-aqueous secondary battery may be 1 or may be 2 or more. In other words, the structure of the presently disclosed laminate for a non-aqueous secondary battery may be any of the following structures (1) to (6).

(1) Positive electrode/Separator
(2) Negative electrode/Separator
(3) Positive electrode/Separator/Negative electrode
(4) Positive electrode/Separator/Negative electrode/Separator
(5) Separator/Positive electrode/Separator/Negative electrode
(6) Structure in which positive electrodes and negative electrodes are stacked alternately with separators in-between (for example, "separator/negative electrode/separator/positive electrode/separator/negative electrode... /separator/positive electrode", etc.)

<Electrode>

The electrode is not specifically limited and can, for example, be an electrode formed of an electrode substrate including an electrode mixed material layer formed on one surface or both surfaces of a current collector or an electrode further including a porous membrane layer formed on an electrode mixed material layer of an electrode substrate.

The current collector, electrode mixed material layer, and porous membrane layer are not specifically limited and can be any current collector, electrode mixed material layer, and porous membrane layer that can be used in the field of secondary batteries, such as any of those described in JP2013-145763A, for example. The porous membrane layer is a layer containing nonconductive particles such as described in JP2013-145763A, for example.

From a viewpoint of further increasing adhesiveness between the electrode and the separator, the surface roughness (Sa) of the electrode is preferably 0.1 μm or more, and is preferably less than 1.0 μm.

<Separator>

The separator is not specifically limited and can, for example, be a separator formed of a separator substrate or a separator including a porous membrane layer formed on one surface or both surfaces of a separator substrate.

The separator substrate and the porous membrane layer are not specifically limited and can be any separator substrate and porous membrane layer that can be used in the field of secondary batteries, such as any of those described in JP2012-204303A and JP2013-145763A, for example.

From a viewpoint of further increasing adhesiveness between the electrode and the separator, the surface roughness (Sa) of the separator is preferably 0.05 μm or more, and is preferably less than 1.0 μm.

<Adhesive layer>

The adhesive layer is provided at a surface of at least one of the electrode and the separator in the presently disclosed laminate for a non-aqueous secondary battery and is a material that adheres the electrode and the separator. In the presently disclosed laminate for a non-aqueous secondary battery, the adhesive layer is a dried product of a composition for adhesion that contains a particulate polymer. Note that although the particulate polymer is present in a particulate form in the composition for adhesion, the particulate polymer may have a particulate form or may have any other form in the adhesive layer.

(Composition for adhesion)

The composition for adhesion is a material that forms the adhesive layer of the presently disclosed laminate for a non-aqueous secondary battery and is required to contain a particulate polymer. The composition for adhesion is normally a slurry composition having a particulate polymer dispersed in a solvent and can optionally contain other components besides the particulate polymer.

<Particulate polymer>

The particulate polymer contained in the composition for adhesion is a component that functions as a binder in the adhesive layer adhering the electrode and the separator. Although either of a particulate polymer that has a core-shell structure and a particulate polymer that does not have a core-shell structure may be used as the particulate polymer in the present disclosure, it is preferable to use a particulate polymer having a core-shell structure.

«Particulate polymer having core-shell structure»

The particulate polymer having a core-shell structure has a core-shell structure that includes a core portion and a shell portion covering an outer surface of the core portion. By using a particulate polymer having a core-shell structure, it is possible to more strongly adhere the electrode and the separator and to form a secondary battery having even better output characteristics.

Note that the shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion.

Note that the particulate polymer may include any constituent element other than the core portion and the shell portion described above so long as the expected effects are not significantly lost. Specifically, the particulate polymer may, for example, include a portion inside of the core portion that is formed of a different polymer to the core portion. In one specific example, a residual seed particle may be present inside of the core portion in a situation in which seed particles are used in production of the particulate polymer by seeded polymerization. However, from a viewpoint of more noticeably displaying the expected effects, it is preferable that the particulate polymer is composed of only the core portion and the shell portion.

[Core portion]

-Glass-transition temperature-

The glass-transition temperature of a polymer of the core portion of the particulate polymer is preferably 25°C or lower, more preferably 10°C or lower, and even more preferably 0°C or lower. When the glass-transition temperature of the polymer of the core portion is not higher than any of the upper limits set forth above, the polymer of the core portion can display good adhesiveness, and the electrode and the separator can be even more strongly adhered via the adhesive layer upon pressing at normal temperature.

Note that the glass-transition temperature of the polymer of the core portion can be adjusted by, for example, altering the types and proportions of monomers used in production of the polymer of the core portion.

-Chemical composition-

Examples of monomers that may be used to produce the polymer of the core portion include vinyl chloride monomers such as vinyl chloride and vinylidene chloride; vinyl acetate monomers such as vinyl acetate; aromatic vinyl monomers such as styrene, α-methylstyrene, styrene sulfonic acid, butoxystyrene, and vinylnaphthalene; vinyl amine monomers such as vinyl amine; vinyl amide monomers such as N-vinylformamide and N-vinylacetamide; non-fluorine containing (meth)acrylic acid ester monomers such as methyl acrylate, ethyl acrylate, butyl acrylate (also referred to as acrylic acid butyl), 2-ethylhexyl acrylate, methyl methacrylate, ethyl methacrylate, butyl methacrylate, and cyclohexyl methacrylate; (meth)acrylamide monomers such as acrylamide and methacrylamide; (meth)acrylonitrile monomers such as acrylonitrile and methacrylonitrile; fluorine-containing (meth)acrylic acid ester monomers such as 2-(perfluorohexyl)ethyl methacrylate and 2-(perfluorobutyl)ethyl acrylate; maleimide; and maleimide derivatives such as phenylmaleimide. One of these monomers may be used individually, or two or more of these monomers may be used in combination in a freely selected ratio.

Note that in the present disclosure, "(meth)acryl" is used to indicate "acryl" and/or "methacryl", whereas "(meth)acrylonitrile" is used to indicate "acrylonitrile" and/or "methacrylonitrile".

Of these monomers, it is preferable to use at least a (meth)acrylic acid ester monomer as a monomer used in production of the polymer of the core portion from a viewpoint of more strongly adhering the electrode and the separator via the adhesive layer, and it is more preferable to use a (meth)acrylic acid ester monomer and an aromatic vinyl monomer in combination or to use a (meth)acrylic acid ester monomer and a (meth)acrylonitrile monomer in combination, and particularly preferable to use a (meth)acrylic acid ester monomer and an aromatic vinyl monomer in combination as monomers used in production of the polymer of the core portion. In other words, the polymer of the core portion preferably includes at least a (meth)acrylic acid ester monomer unit, more preferably includes a (meth)acrylic acid ester monomer unit and an aromatic vinyl monomer unit or a (meth)acrylonitrile monomer unit, and even more preferably includes a (meth)acrylic acid ester monomer unit and an aromatic vinyl monomer unit.

The phrase "includes a monomer unit" as used in the present disclosure means that "a polymer obtained with the monomer includes a repeating unit derived from the monomer".

Moreover, the term "(meth)acrylic acid ester monomer" as used in the present disclosure refers to a monofunctional (meth)acrylic acid ester monomer that includes only one group displaying polymerization reactivity.

From a viewpoint of more strongly adhering the electrode and the separator via the adhesive layer, the proportion constituted by (meth)acrylic acid ester monomer units in the polymer of the core portion when all repeating units (all monomer units) included in the polymer of the core portion are taken to be 100 mass% is preferably 5 mass% or more, more preferably 10 mass% or more, and particularly preferably 20 mass% or more, and is preferably 80 mass% or less, and more preferably 70 mass% or less.

Moreover, from a viewpoint of more strongly adhering the electrode and the separator via the adhesive layer, in a case in which the polymer of the core portion includes a (meth)acrylic acid ester monomer unit and an aromatic vinyl monomer unit, the proportion constituted by aromatic vinyl monomer units in the polymer of the core portion when all repeating units (all monomer units) included in the polymer of the core portion are taken to be 100 mass% is preferably 15 mass% or more, more preferably 20 mass% or more, and particularly preferably 25 mass% or more, and is preferably 95 mass% or less, more preferably 80 mass% or less, and particularly preferably 70 mass% or less.

Furthermore, from a viewpoint of more strongly adhering the electrode and the separator via the adhesive layer, in a case in which the polymer of the core portion includes a (meth)acrylic acid ester monomer unit and a (meth)acrylonitrile monomer unit, the proportion constituted by (meth)acrylonitrile monomer units in the polymer of the core portion when all repeating units (all monomer units) included in the polymer of the core portion are taken to be 100 mass% is preferably 5 mass% or more, more preferably 10 mass% or more, and particularly preferably 15 mass% or more, and is preferably 30 mass% or less, and more preferably 25 mass% or less.

The polymer of the core portion can also include an acid group-containing monomer unit. Examples of acid group-containing monomers that can form an acid group-containing monomer unit include monomers having an acid group such as carboxy group-containing monomers, sulfo group-containing monomers, and phosphate group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Note that in the present disclosure, "(meth)allyl" is used to indicate "allyl" and/or "methallyl", whereas "(meth)acryloyl" is used to indicate "acryloyl" and/or "methacryloyl".

Of these acid group-containing monomers, carboxy group-containing monomers are preferable, of which, monocarboxylic acids are preferable, and (meth)acrylic acid is more preferable.

One acid group-containing monomer may be used individually, or two or more acid group-containing monomers may be used in combination in a freely selected ratio.

The proportion constituted by acid group-containing monomer units in the polymer of the core portion when all repeating units (all monomer units) included in the polymer of the core portion are taken to be 100 mass% is preferably 0.1 mass% or more, and more preferably 1 mass% or more, and is preferably 15 mass% or less, and more preferably 10 mass% or less. By restricting the proportion constituted by acid group-containing monomer units to within any of the ranges set forth above, it is possible to increase dispersibility of the polymer of the core portion during production of the particulate polymer and to facilitate formation of a shell portion that partially covers an outer surface of the core portion with respect to the outer surface of the polymer of the core portion.

The polymer of the core portion preferably includes a cross-linkable monomer unit in addition to the monomer units described above. A cross-linkable monomer that can form a cross-linkable monomer unit is a monomer that can form a cross-linked structure during polymerization or after polymerization upon heating or irradiation with energy rays.

Examples of cross-linkable monomers that can be used include polyfunctional monomers having at least two groups that display polymerization reactivity in the monomer. Examples of such polyfunctional monomers include divinyl monomers such as divinylbenzene, 1,3-butadiene, isoprene, and allyl methacrylate; di(meth)acrylic acid ester monomers such as ethylene dimethacrylate, diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; epoxy group-containing ethylenically unsaturated monomers such as allyl glycidyl ether and glycidyl methacrylate; and γ-methacryloxypropyltrimethoxysilane. Of these monomers, di(meth)acrylic acid ester monomers are more preferable. Note that one of these monomers may be used individually, or two or more of these monomers may be used in combination in a freely selected ratio.

The proportion constituted by cross-linkable monomer units in the polymer of the core portion when all repeating units (all monomer units) included in the polymer of the core portion are taken to be 100 mass% is preferably 0.1 mass% or more, more preferably 0.2 mass% or more, and particularly preferably 0.4 mass% or more, and is preferably 10 mass% or less, more preferably 5 mass% or less, and particularly preferably 3 mass% or less. By restricting the proportion constituted by cross-linkable monomer units to within any of the ranges set forth above, it is possible to more strongly adhere the electrode and the separator via the adhesive layer.

[Shell portion]

-Glass-transition temperature-

The glass-transition temperature of a polymer of the shell portion of the particulate polymer is preferably 50°C or higher, more preferably 55°C or higher, and even more preferably 60°C or higher, and is preferably 200°C or lower, and more preferably 120°C or lower. When the glass-transition temperature of the polymer of the shell portion is not lower than any of the lower limits set forth above, it is possible to further improve inkjet ejection characteristics in a situation in which the composition for adhesion is supplied onto a surface of at least one of the electrode and the separator by an inkjet method. Moreover, when the glass-transition temperature of the polymer of the shell portion is not higher than any of the upper limits set forth above, it is possible to even more strongly adhere the electrode and the separator via the adhesive layer at normal temperature because the particulate polymer is softened to a suitable degree.

Note that the glass-transition temperature of the polymer of the shell portion can be adjusted by, for example, altering the types and proportions of monomers used in production of the polymer of the shell portion.

Moreover, from a viewpoint of maintaining the form of the particulate polymer after adhesion of the electrode and the separator and suppressing increase of resistance, the glass-transition temperature of the polymer of the shell portion is preferably at least 25°C higher than the glass-transition temperature of the polymer of the core portion described above, and is more preferably at least 50°C higher than the glass-transition temperature of the polymer of the core portion described above.

-Chemical composition-

Examples of monomers that can be used to produce the polymer of the shell portion include the same monomers as given as examples of monomers that can be used to produce the polymer of the core portion. One of such monomers may be used individually, or two or more of such monomers may be used in combination in a freely selected ratio.

Of these monomers, it is preferable to use either or both of a (meth)acrylic acid ester monomer and an aromatic vinyl monomer as monomers used in production of the polymer of the shell portion from a viewpoint of even more strongly adhering the electrode and the separator via the adhesive layer, and more preferable to use both a (meth)acrylic acid ester monomer and an aromatic vinyl monomer as monomers used in production of the polymer of the shell portion. In other words, the polymer of the shell portion preferably includes either or both of a (meth)acrylic acid ester monomer unit and an aromatic vinyl monomer unit, and more preferably includes both a (meth)acrylic acid ester monomer unit and an aromatic vinyl monomer unit.

From a viewpoint of even more strongly adhering the electrode and the separator via the adhesive layer, the proportion constituted by (meth)acrylic acid ester monomer units in the polymer of the shell portion when all repeating units (all monomer units) included in the polymer of the shell portion are taken to be 100 mass% is preferably 10 mass% or more, more preferably 20 mass% or more, and even more preferably 32.5 mass% or more, and is preferably 90 mass% or less, and more preferably 85 mass% or less.

Moreover, from a viewpoint of even more strongly adhering the electrode and the separator via the adhesive layer, the proportion constituted by aromatic vinyl monomer units in the polymer of the shell portion when all repeating units (all monomer units) included in the polymer of the shell portion are taken to be 100 mass% is preferably 50 mass% or more, and more preferably 65 mass% or more, and is preferably 99 mass% or less, and more preferably 95 mass% or less.

The polymer of the shell portion can include an acid group-containing monomer unit besides a (meth)acrylic acid ester monomer unit and an aromatic vinyl monomer unit. Examples of acid group-containing monomers that can form an acid group-containing monomer unit include monomers having an acid group such as carboxy group-containing monomers, sulfo group-containing monomers, and phosphate group-containing monomers. Specifically, examples of acid group-containing monomers that can be used include the same monomers as acid group-containing monomers that can be used in formation of the core portion.

Of these acid group-containing monomers, carboxy group-containing monomers are preferable, of which, monocarboxylic acids are more preferable, and (meth)acrylic acid is even more preferable.

Note that one acid group-containing monomer may be used individually, or two or more acid group-containing monomers may be used in combination in a freely selected ratio.

The proportion constituted by acid group-containing monomer units in the polymer of the shell portion when all repeating units (all monomer units) included in the polymer of the shell portion are taken to be 100 mass% is preferably 0.1 mass% or more, more preferably 0.4 mass% or more, and even more preferably 0.7 mass% or more, and is preferably 15 mass% or less, more preferably 10 mass% or less, and even more preferably 5 mass% or less. By restricting the proportion constituted by acid group-containing monomer units to within any of the ranges set forth above, dispersibility of the particulate polymer can be improved, and the electrode and the separator can be even more strongly adhered via the adhesive layer.

The polymer of the shell portion may include a hydroxy group-containing monomer unit.

Examples of hydroxy group-containing monomers that can form a hydroxy group-containing monomer unit of the polymer of the shell portion include the same monomers as hydroxy group-containing monomers that can be used to form the core portion.

The proportion constituted by hydroxy group-containing monomer units in the polymer of the shell portion when all repeating units (all monomer units) included in the polymer of the shell portion are taken to be 100 mass% is preferably 0.1 mass% or more, more preferably 0.4 mass% or more, and even more preferably 0.7 mass% or more, and is preferably 15 mass% or less, more preferably 10 mass% or less, and even more preferably 5 mass% or less. By restricting the proportion constituted by hydroxy group-containing monomer units to within any of the ranges set forth above, dispersibility of the particulate polymer can be improved, and the electrode and the separator can be even more strongly adhered via the adhesive layer.

Moreover, the polymer of the shell portion can include a cross-linkable monomer unit. Examples of cross-linkable monomers that can form a cross-linkable monomer unit include the same monomers as those given as examples of cross-linkable monomers that can be used for the polymer of the core portion. Of these cross-linkable monomers, di(meth)acrylic acid ester monomers and allyl methacrylate are preferable. Moreover, one cross-linkable monomer may be used individually, or two or more cross-linkable monomers may be used in combination in a freely selected ratio.

The proportion constituted by cross-linkable monomer units in the polymer of the shell portion when all repeating units (all monomer units) included in the polymer of the shell portion are taken to be 100 mass% is preferably 0.05 mass% or more, more preferably 0.1 mass% or more, and even more preferably 0.2 mass% or more, and is preferably 4 mass% or less, more preferably 3 mass% or less, and even more preferably 2 mass% or less.

[Mass proportion of shell portion among total of core portion and shell portion]

The mass proportion of the shell portion among the total of the core portion and the shell portion in the particulate polymer having a core-shell structure is preferably 2 mass% or more, and is preferably 15 mass% or less, and more preferably 10 mass% or less. When the mass proportion of the shell portion is not less than the lower limit set forth above, inkjet ejection characteristics can be even further improved. Moreover, when the mass proportion of the shell portion is not more than any of the upper limits set forth above, the electrode and the separator can be even more strongly adhered upon pressing at normal temperature, and a secondary battery can be caused to display even better battery characteristics.

The mass proportion of the shell portion among the total of the core portion and the shell portion is determined from a subsequently described ratio of thicknesses of the core portion and the shell portion and the specific gravity of the particulate polymer.

[Volume-average particle diameter of particulate polymer having core-shell structure]

The volume-average particle diameter (D50) of the particulate polymer having a core-shell structure is preferably 100 nm or more, and more preferably 200 nm or more, and is preferably 1,500 nm or less, and more preferably 1,300 nm or less. When the volume-average particle diameter of the particulate polymer having a core-shell structure is 100 nm or more, it is possible to inhibit deterioration of battery characteristics caused by the resistance of a secondary battery increasing due to blocking of paths for lithium ions in the electrode or separator. Moreover, when the volume-average particle diameter is 1,500 nm or less, it is possible to further inhibit nozzle clogging and improve inkjet ejection characteristics in a situation in which the composition for adhesion is applied by an inkjet method.

Note that the volume-average particle diameter of a particulate polymer having a core-shell structure can be measured by a method described in the EXAMPLES section of the present specification.

Also note that the volume-average particle diameter of the particulate polymer having a core-shell structure can be adjusted to within a desired range by adjusting the amount of emulsifier, the amounts of monomers, and so forth, for example, in production of the core portion and/or the shell portion of the particulate polymer.

[Ratio of average thickness of shell portion relative to volume-average particle diameter]

A ratio of the average thickness of the shell portion relative to the volume-average particle diameter of the particulate polymer having a core-shell structure is preferably 0.1% or more, and more preferably 0.5% or more, and is preferably 15% or less, and more preferably 10% or less. When the average thickness of the shell portion is not less than any of the lower limits set forth above, it is possible to even further improve inkjet ejection characteristics in a situation in which the composition for adhesion is applied by an inkjet method. Moreover, when the average thickness of the shell portion is not more than any of the upper limits set forth above, it is possible to even more strongly adhere the electrode and the separator upon pressing of the electrode and the separator at normal temperature.

The average thickness of the shell portion of the particulate polymer having a core-shell structure is determined by using a transmission electron microscope (TEM) to observe the cross-sectional structure of the particulate polymer having a core-shell structure. Specifically, the maximum thickness of the shell portion in the cross-sectional structure of the particulate polymer is measured using a TEM, and an average value for the maximum thickness of the shell portion in at least 20 arbitrarily selected particles of the particulate polymer is taken to be the average thickness of the shell portion. However, in a case in which the shell portion is formed of particles of a polymer and in which these particles of the polymer form the shell portion as a monolayer without the particles forming the shell portion overlapping with one another in a radial direction of a particle of the particulate polymer, the number-average particle diameter of the particles forming the shell portion is taken to be the average thickness of the shell portion.

The presently disclosed composition for adhesion may contain two or more particulate polymers having different volume-average particle diameters (D50) in a freely selected ratio as the particulate polymer. For example, a particulate polymer A having a volume-average particle diameter (D50) of 500 nm or more and a particulate polymer B having a volume-average particle diameter (D50) of less than 500 nm may be used together as the particulate polymer that is contained in the composition for adhesion. In this case, it is preferable that at least one particulate polymer among the two or more particulate polymers having different volume-average particle diameters is a particulate polymer that has the core-shell structure described above from a viewpoint of more strongly adhering the electrode and the separator.

[Production method of particulate polymer having core-shell structure]

The particulate polymer having a core-shell structure described above can be produced, for example, by stepwise polymerization in which monomers of the polymer of the core portion and monomers of the polymer of the shell portion are used and in which the ratio of these monomers is changed over time. Specifically, the particulate polymer can be produced by continuous, multi-step emulsion polymerization or multi-step suspension polymerization in which a polymer of a preceding step is then covered by a polymer of a subsequent step.

The following describes one example of a case in which the particulate polymer having a core-shell structure described above is obtained by multi-step emulsion polymerization.

In the polymerization, an anionic surfactant such as sodium dodecylbenzenesulfonate or sodium dodecyl sulfate, a non-ionic surfactant such as polyoxyethylene nonylphenyl ether or sorbitan monolaurate, or a cationic surfactant such as octadecylamine acetate can be used as an emulsifier in accordance with a standard method. Moreover, a peroxide such as t-butyl peroxy-2-ethylhexanoate, potassium persulfate, or cumene peroxide or an azo compound such as 2,2'-azobis(2-methyl-N-(2-hydroxyethyl)propionamide) or 2,2'-azobis(2-amidinopropane) hydrochloride, for example, can be used as a polymerization initiator.

The polymerization procedure involves initially mixing monomers for forming the core portion and the emulsifier, and performing emulsion polymerization as one batch to obtain a particulate polymer that forms the core portion. The particulate polymer having a core-shell structure described above can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions in a case in which a particulate polymer where an outer surface of a core portion is partially covered by a shell portion is to be produced. As a result of the monomers for forming the polymer of the shell portion being supplied into the polymerization system in portions or continuously, the polymer forming the shell portion can be formed as particles that bond to the core portion such as to form a shell portion that partially covers the core portion.

«Particulate polymer not having core-shell structure» -Glass-transition temperature-

The glass-transition temperature of the particulate polymer not having a core-shell structure is preferably -40°C or higher, more preferably -35°C or higher, and even more preferably -30°C or higher, and is preferably 0°C or lower, more preferably -10°C or lower, and even more preferably -20°C or lower. When the glass-transition temperature of the particulate polymer not having a core-shell structure is -40°C or higher, the electrode and the separator can be more strongly adhered via the adhesive layer. On the other hand, when the glass-transition temperature of the particulate polymer not having a core-shell structure is 0°C or lower, detachment of the particulate polymer from the electrode or separator can be inhibited.

-Chemical composition-

Examples of monomers that can be used to produce the particulate polymer not having a core-shell structure include the same monomers as monomers given as examples of monomers that can be used to produce the polymer of the core portion of the particulate polymer having a core-shell structure described above. For example, it is preferable to use a (meth)acrylic acid ester monomer, an aromatic vinyl monomer, an acid group-containing monomer, a cross-linkable monomer, and the like as monomers used to produce the particulate polymer not having a core-shell structure. Note that one of such monomers may be used individually, or two or more of such monomers may be used in combination in a freely selected ratio.

From a viewpoint of more strongly adhering the electrode and the separator via the adhesive layer, the proportion constituted by (meth)acrylic acid ester monomer units in the particulate polymer not having a core-shell structure when all repeating units (all monomer units) included in the polymer are taken to be 100 mass% is preferably 40 mass% or more, more preferably 50 mass% or more, and even more preferably 60 mass% or more, and is preferably 85 mass% or less, more preferably 80 mass% or less, and even more preferably 75 mass% or less.

From a viewpoint of more strongly adhering the electrode and the separator via the adhesive layer, the proportion constituted by aromatic vinyl monomer units in the particulate polymer not having a core-shell structure when all repeating units (all monomer units) included in the polymer are taken to be 100 mass% is preferably 10 mass% or more, more preferably 15 mass% or more, and even more preferably 20 mass% or more, and is preferably 40 mass% or less, more preferably 35 mass% or less, and even more preferably 30 mass% or less.

The proportion constituted by acid group-containing monomer units in the particulate polymer not having a core-shell structure when all repeating units (all monomer units) included in the polymer are taken to be 100 mass% is preferably 0.5 mass% or more, more preferably 1 mass% or more, and even more preferably 2 mass% or more, and is preferably 10 mass% or less, more preferably 7 mass% or less, and even more preferably 5 mass% or less. By restricting the proportion constituted by acid group-containing monomer units in the particulate polymer not having a core-shell structure to within any of the ranges set forth above, it is possible to increase dispersibility of the particulate polymer.

From a viewpoint of more strongly adhering the electrode and the separator via the adhesive layer, the proportion constituted by cross-linkable monomer units in the particulate polymer not having a core-shell structure when all repeating units (all monomer units) included in the polymer are taken to be 100 mass% is preferably 0.2 mass% or more, more preferably 0.5 mass% or more, and even more preferably 1 mass% or more, and is preferably 5 mass% or less, more preferably 4 mass% or less, and even more preferably 3 mass% or less.

[Volume-average particle diameter of particulate polymer not having core-shell structure]

The volume-average particle diameter of the particulate polymer not having a core-shell structure is preferably 50 nm or more, more preferably 100 nm or more, and even more preferably 200 nm or more, and is preferably 600 nm or less, more preferably 500 nm or less, and even more preferably 400 nm or less. When the volume-average particle diameter of the particulate polymer not having a core-shell structure is within any of the specific ranges set forth above, the electrode and the separator can be more strongly adhered via the adhesive layer.

Note that the volume-average particle diameter of the particulate polymer not having a core-shell structure can be set within a desired range by adjusting the amount of emulsifier, the amounts of monomers, and so forth, for example, in production of the particulate polymer.

[Content of particulate polymer not having core-shell structure]

The content of the particulate polymer not having a core-shell structure in the composition for adhesion can be adjusted as appropriate to the extent that the desired effects according to the present disclosure are obtained, but is preferably 5 parts by mass or more, and more preferably 10 parts by mass or more per 100 parts by mass of the particulate polymer having a core-shell structure. When the content of the particulate polymer not having a core-shell structure is not less than any of the lower limits set forth above, detachment of the particulate polymer from the electrode or the separator can be inhibited.

[Production method of particulate polymer not having core-shell structure]

The particulate polymer not having a core-shell structure can be produced by, for example, polymerizing a monomer composition containing the monomers described above in an aqueous solvent such as water, for example, but is not specifically limited to being produced in this manner. Note that the proportion constituted by each monomer in the monomer composition is normally the same as the proportion constituted by each monomer unit in the particulate polymer not having a core-shell structure. Commonly known polymerization methods and polymerization reactions can be adopted as the polymerization method and the polymerization reaction without any specific limitations.

«Degree of swelling in electrolyte solution»

Although a specific range is not designated for the degree of swelling of the particulate polymer in electrolyte solution (solution obtained by dissolving $LiPF_6$ with a concentration of 1 mol/L in a mixed solvent of ethylene carbonate and diethyl carbonate (volume ratio: 3/7)), which is also referred to below simply as the "degree of swelling", it is preferable that the particulate polymer does not dissolve in electrolyte solution from a viewpoint of maintaining battery characteristics well.
Note that the above-described degree of swelling in electrolyte solution of a particulate polymer can be measured by a method described in the EXAMPLES section of the present specification.

<Solvent>

Water, an organic solvent, or a mixture thereof, for example, can be used as the solvent in which the particulate polymer is dispersed without any specific limitations. Examples of organic solvents that may be used include, but are not specifically limited to, alicyclic hydrocarbons such as cyclopentane and cyclohexane; aromatic hydrocarbons such as toluene and xylene; ketones such as ethyl methyl ketone and cyclohexanone; esters such as ethyl acetate, butyl acetate, $\gamma$-butyrolactone, and $\varepsilon$-caprolactone; nitriles such as acetonitrile and propionitrile; ethers such as tetrahydrofuran and ethylene glycol diethyl ether; and alcohols such as methanol, ethanol, isopropanol, ethylene glycol, propylene glycol, and ethylene glycol monomethyl ether.
Of the above-described solvents, it is preferable to use water from a viewpoint of simplifying equipment.
At least some of the above-described solvent may be removed by drying or the like in a production step of the laminate for a non-aqueous secondary battery.

<Other components>

Examples of other components that are optionally contained in the composition for adhesion include, but are not specifically limited to, components such as surface tension modifiers, dispersants differing from a dispersant used in polymerization described above, viscosity modifiers, reinforcing materials, and additives for electrolyte solution. These other components are not specifically limited so long as they do not affect battery reactions and can be selected from commonly known components such as those described in WO2012/115096A1, for example. One of these components may be used individually, or two or more of these components may be used in combination in a freely selected ratio.
The solid content concentration in the composition for adhesion is not specifically limited but is normally not less than 3 mass% and not more than 20 mass%.

<Production method of composition for adhesion>

No specific limitations are placed on the method by which the composition for adhesion is produced. For example, the composition for adhesion can be produced by stirring and mixing the particulate polymer and other optional components in the presence of the solvent. Known methods can be adopted as the method of mixing and stirring without any specific limitations. Specifically, a typical stirring vessel, ball mill, sand mill, bead mill, pigment disperser, ultrasonic disperser, grinding machine, homogenizer, planetary mixer, FILMIX, or the like can be used. The mixing conditions are not specifically limited, and mixing can normally be performed in a temperature range of not lower than room temperature and not higher than 80°C for not less than 10 minutes and not more than several hours.

<Properties of composition for adhesion>

In the presently disclosed laminate for a non-aqueous secondary battery, the composition for adhesion forming the adhesive layer preferably has the following properties.

<<Viscosity>>

The composition for adhesion preferably has a viscosity $\eta_0$ at a shear rate of 100 s$^{-1}$ of not less than 1.0 Pa·s and not more than 3.0 Pa·s. When the viscosity $\eta_0$ of the composition for adhesion at a shear rate of 100 s$^{-1}$ is not less than the lower limit set forth above, the electrode and the separator can be more strongly adhered, and an increase of resistance of a secondary battery can be further suppressed. Moreover, when the viscosity $\eta_0$ of the composition for adhesion at a shear rate of 100 s$^{-1}$ is not more than the upper limit set forth above, nozzle clogging can be inhibited and excellent ejection performance can be ensured when the composition for adhesion is ejected from a nozzle by an inkjet method.

In addition, the composition for adhesion preferably has a viscosity $\eta_1$ at a shear rate of 10,000 s$^{-1}$ of not less than 1.0 mPa·s and not more than 3.0 mPa·s. When the viscosity $\eta_1$ of the composition for adhesion at a shear rate of 10,000 s$^{-1}$ is not less than the lower limit set forth above, the electrode and the separator can be more strongly adhered, and an increase of resistance of a secondary battery can be further suppressed. Moreover, when the viscosity $\eta_1$ of the composition for adhesion at a shear rate of 10,000 s$^{-1}$ is not more than the upper limit set forth above, nozzle clogging can be further inhibited and even better ejection performance can be ensured when the composition for adhesion is ejected from a nozzle by an inkjet method.

A ratio ($\eta_0/\eta_1$) of the viscosity $\eta_0$ relative to the viscosity $\eta_1$ for the composition for adhesion is preferably not less than 1.0 and not more than 3.0. When the ratio ($\eta_0/\eta_1$) of the viscosity $\eta_0$ relative to the viscosity $\eta_1$ is not less than the lower limit set forth above, the electrode and the separator can be more strongly adhered, and an increase of battery resistance of a secondary battery can be further suppressed. Moreover, when the ratio ($\eta_0/\eta_1$) of the viscosity $\eta_0$ relative to the viscosity $\eta_1$ is not more than the upper limit set forth above, nozzle clogging can be further inhibited and even better ejection performance can be ensured when the composition for adhesion is ejected from a nozzle by an inkjet method.

Note that the "viscosity $\eta_0$ at a shear rate of 100 s$^{-1}$" and the "viscosity $\eta_1$ at a shear rate of 10,000 s$^{-1}$" can be measured by a method described in the EXAMPLES section of the present specification.

Also note that the viscosity $\eta_0$, the viscosity $\eta_1$, and the ratio ($\eta_0/\eta_1$) of the viscosity $\eta_0$ relative to the viscosity $\eta_1$ can be adjusted as appropriate through adjustment of the particulate polymer in the composition for adhesion, the solid content concentration of the composition for adhesion, and so forth.

«Shape of adhesive layer»

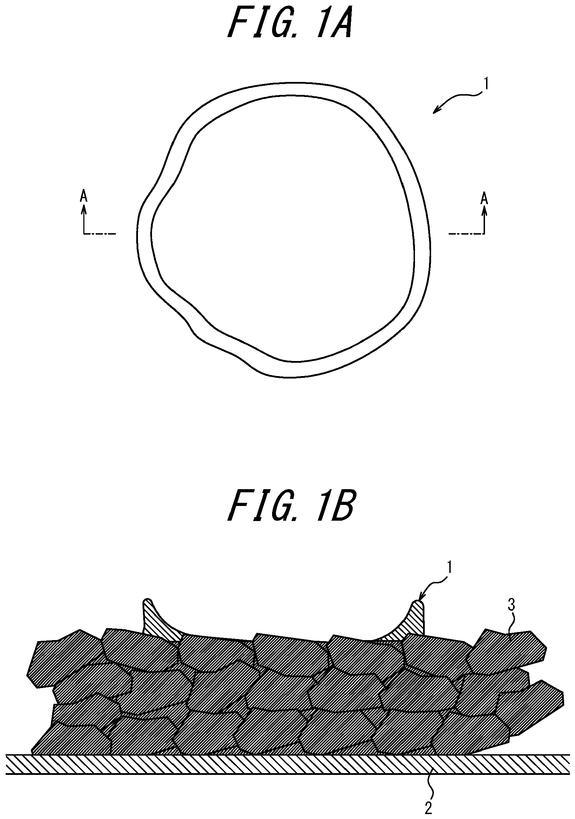

In the presently disclosed laminate for a non-aqueous secondary battery, the adhesive layer that is a dried product of the composition for adhesion has an uneven shape in which a peripheral part has a raised shape and a central part has a depressed shape as previously described. The adhesive layer can have any plan-view shape such as a striped shape, a dotted shape, or a lattice shape without any specific limitations. In particular, it is preferable that the adhesive layer is formed of a plurality of dot-like adhesive layers from a viewpoint of further reducing resistance of a secondary battery. Moreover, the dot-like adhesive layers preferably have a crater-like uneven shape such as illustrated by a schematic plan view of one example of an adhesive layer 1 in FIG. 1A and a cross-sectional view at a line A-A indicated in FIG. 1A that is illustrated in FIG. 1B. FIG. 1B illustrates a case in which the adhesive layer 1 is formed on a negative electrode mixed material layer 3 on a current collector 2 in order to further facilitate understanding. In a case in which the adhesive layer is formed of a plurality of dot-like adhesive layers that each have a crater-like uneven shape, the dot diameter per one adhesive layer is preferably 50 $\mu$m or more.

Note that a dot-like adhesive layer having a crater-like uneven shape can be formed by an inkjet method using a subsequently described coating machine, for example.

The maximum thickness of the adhesive layer is preferably 2 $\mu$m or more. When the maximum thickness of the adhesive layer is 2 $\mu$m or more, adhesive strength between the electrode and the separator can be further increased. Note that the "maximum thickness of the adhesive layer" referred to in the present disclosure is the maximum value for thickness of the adhesive layer upon measurement of the adhesive layer using a laser microscope.

The mass per unit area of the adhesive layer is preferably 0.02 g/m$^2$ or more, and is preferably 1.0 g/m$^2$ or

less, and more preferably 0.5 g/m$^2$ or less. When the mass per unit area of the adhesive layer is not less than the lower limit set forth above, the electrode and the separator can be sufficiently strongly adhered. Moreover, when the mass per unit area of the adhesive layer is not more than any of the upper limits set forth above, sufficiently high output characteristics of a secondary battery can be ensured.

Note that the "mass per unit area of the adhesive layer" referred to in the present disclosure can be determined from the mass difference per unit area between before supply of the composition for adhesion and after supply and drying of the composition for adhesion on the electrode or the separator.

The ratio of coverage of the adhesive layer is preferably 1% or more, and more preferably 5% or more, and is preferably 50% or less, and more preferably 30% or less. When the ratio of coverage of the adhesive layer is not less than any of the lower limits set forth above, the electrode and the separator can be more strongly adhered. Moreover, when the ratio of coverage of the adhesive layer is not more than any of the upper limits set forth above, sufficiently high output characteristics of a secondary battery can be ensured.

The "ratio of coverage of the adhesive layer" refers to the proportion occupied by area of a portion covered by the adhesive layer among the overall area of the electrode or the separator on which the adhesive layer is provided [i.e., (area of portion covered by adhesive layer/area of entire surface or region) $\times$ 100(%)].

The ratio of coverage of the adhesive layer can be adjusted by altering the pattern in which the adhesive layer is arranged on the electrode or the separator. Specifically, in a case in which the adhesive layer is arranged in a dotted pattern on the electrode or the separator, the ratio of coverage of the adhesive layer can be adjusted by altering the diameter of dots and the distance between centers of dots of the adhesive layer. For example, in the case of an electrode or separator having an adhesive layer arranged in a dotted pattern having dots formed at fixed intervals in two orthogonal directions, the ratio of coverage of the adhesive layer can be determined by the following formula (4) using the distances (pitches) x and y between centers of the dots and the radius r of the dots.

$$\text{Ratio of coverage of adhesive layer} = \{\pi r^2/(x \cdot y)\} \times 100(\%) \cdots \text{Formula (4)}$$

(Production method of laminate for non-aqueous secondary battery)

The presently disclosed laminate for a secondary battery set forth above can, for example, be efficiently produced by a production method according to one example described below. In the production method according to one example, the laminate for a secondary battery is produced by implementing a step (A) of supplying the composition for adhesion described above to an affixing surface of at least one of the electrode and the separator, subsequently implementing a step (B) of conveying the electrode and the separator to an affixing start position without bringing another member into contact with the affixing surface to which the composition for adhesion has been supplied, and then further implementing a step (C) of affixing the electrode and the separator to each other via the affixing surface. The term "affixing start position" refers to a position at which an affixing surface of the electrode and an affixing surface of the separator come into contact when the electrode and the separator are being affixed to each other.

<Step (A)>

In the step (A), the previously described composition for adhesion is supplied to an affixing surface of at least one of the electrode and the separator. Note that the electrode that is used in production of the laminate for a secondary battery may be wound up in a roll form or may be pre-cut. Also note that the separator that is used in production of the laminate for a secondary battery may be wound up in a roll form or may be pre-cut. In particular, it is preferable that the separator is wound up in a roll form from a viewpoint of efficient continuous production of the laminate for a secondary battery.

Supply of the composition for adhesion to the affixing surface can be performed by a method such as an inkjet method, a spraying method, a dispenser method, a gravure coating method, or a screen printing method without any specific limitations. Of these methods, an inkjet method is preferable for supply of the composition for adhesion from a viewpoint of high productivity and freedom of formation shape. The composition for adhesion is supplied to at least one of the electrode and the separator during supply of the composition for adhesion to the affixing surface. The electrode may be a positive electrode or may be a negative electrode.

Note that the composition for adhesion may be supplied to the entirety of the affixing surface or may be supplied to just part of the affixing surface. In a case in which the composition for adhesion is supplied to just part of the affixing surface, the composition for adhesion may be supplied such as to have any plan-view shape, such as a striped shape, a dotted shape, or a lattice shape without any specific limitations. Of these examples, supply of the composition for adhesion with a dotted shape is preferable from a viewpoint of increasing injectability of electrolyte solution in production of a secondary battery using the laminate for a secondary battery.

<Step (B)>

In the step (B), the electrode and the separator are conveyed to an affixing start position without bringing another member into contact with the affixing surface to which the composition for adhesion has been supplied. By not bringing another member into contact with the affixing surface to which the composition for adhesion has been supplied in this manner, problems such as blocking do not occur, which makes it possible to form an adhesive layer having excellent adhesiveness and to efficiently produce the laminate for a secondary battery.

Note that the conveying of the electrode and the separator can be performed by any conveying mechanism such as a roller, a belt conveyor, a manipulator, or a suction band, for example, without any specific limitations. Of these examples, it is preferable that at least one of the electrode and the separator is conveyed by a roller from a viewpoint of further increasing production efficiency of the laminate for a secondary battery.

<Step (C)>

In the step (C), an affixing step of affixing the electrode and the separator to each other via the affixing surface and an optional cutting step that is described further below can be implemented. This affixing can be performed through pressing at normal temperature and/or heating, for example, of a laminate in which the electrode and the separator are overlapped with the affixing surface in-between, for example, but is not specifically limited to being performed in this manner. The time interval from completion of the step (A) to the start of the step (C) is preferably shorter than the time required for the composition for adhesion to completely dry. In other words, the composition for adhesion has preferably not completely dried at the point at which the step (C) starts. In a situation in which the step (C) can be started at a timing at which the composition for adhesion is not dried, the electrode and the separator can be more strongly adhered.

Note that the pressure applied to the laminate, the temperature during affixing of the electrode and the separator, and the time for which pressing and/or heating of the laminate is performed in the step (C) can be adjusted as appropriate depending on the amount of the composition for adhesion that is used, for example. For example, the pressure during pressing of the laminate can be adjusted as appropriate depending on the used amount of the composition for adhesion, etc., but is preferably more than 1 MPa and not more than 5 MPa.

Drying of the composition for adhesion can be performed using a heating device such as a heater, a dryer, or a heating roller without any specific limitations. The temperature during drying of the electrode and/or separator to which the composition for adhesion has been supplied is not specifically limited but is preferably 60°C or higher, more preferably 70°C or higher, and preferably 80°C or higher, and is preferably 100°C or lower. When the temperature during drying is not lower than any of the lower limits set forth above, the electrode and the separator can be more strongly adhered, and battery performance of a secondary battery can be further improved. Moreover, when the temperature during drying is not higher than the upper limit set forth above, the adhesive layer is more easily formed, and productivity of the laminate for a non-aqueous secondary battery can be improved. The drying time is not specifically limited but is preferably not less than 0.1 seconds and not more than 120 seconds.

<<Cutting step>>

The cutting step is a step of cutting the affixed body obtained in the affixing step to desired dimensions. The cutting can, for example, be performed using any cutting machine that can be used in the field of secondary battery production, such as a cutting machine that sandwiches and cuts an affixed body through cutting blades from both sides in a thickness direction of the affixed body.

(Non-aqueous secondary battery)

A feature of the presently disclosed non-aqueous secondary battery is that it includes the presently disclosed laminate for a non-aqueous secondary battery. The presently disclosed secondary battery has excellent battery characteristics such as output characteristics as a result of including the presently disclosed laminate for a secondary battery. No specific limitations are placed on the method by which the presently disclosed non-aqueous battery is produced. In one example, a step (assembly step) of assembling the secondary battery using the laminate for a secondary battery and an electrolyte solution is implemented in production of the secondary battery using the presently disclosed laminate for a secondary battery.

<Assembly step>

The electrolyte solution is normally an organic electrolyte solution obtained by dissolving a supporting electrolyte in an organic solvent. For example, a lithium salt is used as the supporting electrolyte in a case in which the secondary battery is a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

The secondary battery can be assembled by further stacking an additional battery member (electrode and/or separator, etc.) with the presently disclosed laminate for a secondary battery, as necessary, subsequently performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Various measurements and evaluations in the examples and comparative examples were performed by the following methods.

<Glass-transition temperature>

A water dispersion of a particulate polymer produced in each production example was dried at a temperature of 130°C for 1 hour to obtain a measurement sample. The measurement sample was weighed into an aluminum pan in an amount of 10 mg and was measured by a differential scanning calorimeter (EXSTAR DSC6220 produced by SII NanoTechnology Inc.) under conditions prescribed by JIS Z8703 with a measurement temperature range of -100°C to 500°C and a heating rate of 10°C/min to obtain a differential scanning calorimetry (DSC) curve. Note that an empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Volume-average particle diameter (D50)>

The volume-average particle diameter (D50) of a particulate polymer produced in each production example was measured by laser diffraction. Specifically, in a particle size distribution (by volume) obtained using a laser diffraction particle size analyzer (produced by Beckman Coulter, Inc.; product name: LS-13 320) with a water dispersion (solid content concentration: 0.1 mass%) containing the produced particulate polymer as a sample, the particle diameter at which cumulative volume calculated from a small diameter end of the distribution reached 50% was determined and was taken to be the volume-average particle diameter (D50) [nm].

<Degree of swelling>

A water dispersion of a particulate polymer produced in each production example was dried, and approximately 0.2 g of the resultant dried product was pressed under pressing conditions of a temperature of 200°C and a pressure of 5 MPa for 2 minutes to obtain a film. The obtained film was cut to 1 cm-square to obtain a test specimen, and the mass W2 (g) of this test specimen was measured. Next, the test specimen was immersed in electrolyte solution (solution obtained by dissolving $LiPF_6$ with a concentration of 1 mol/L in a mixed solvent of ethylene carbonate and diethyl carbonate (volume ratio: 3/7)) at a temperature of 60°C for 72 hours. The test specimen was subsequently removed from the electrolyte solution, mixed solvent on the surface of the test specimen was wiped off, and the mass W3 (g) of the test specimen was measured. The degree of swelling (%) was then calculated by the following formula.

$$\text{Degree of swelling (\%)} = W3/W2 \times 100$$

<Particle size distribution of composition for adhesion>

A composition for adhesion produced in each example or comparative example was measured by laser diffraction. Specifically, in a particle size distribution (by volume) obtained using a laser diffraction particle size analyzer (produced by Beckman Coulter, Inc.; product name: LS-13 320) with a water dispersion (solid content concentration: 0.1 mass%) containing the produced composition for adhesion as a sample, the particle diameter at which cumulative volume calculated from a small diameter end of the distribution reached 50% was taken to be the particle size distribution (D50) [nm] of the composition for adhesion. Moreover, the particle diameter at which cumulative volume calculated from the small diameter end of this particle size distribution reached 90% was taken to be the particle size distribution (D90) [nm] of the composition for adhesion.

<Slurry physical properties of composition for adhesion>

A rheometer (MCR 502 produced by Anton Paar GmbH) was used to measure the viscosity $\eta_0$ at a shear rate of 100 s$^{-1}$ and the viscosity $\eta_1$ at a shear rate of 10,000 s$^{-1}$ at a temperature of 25°C. Values determined for the viscosity $\eta_0$ and viscosity $\eta_1$ were used to calculate a ratio $(\eta_0/\eta_1)$ of the viscosity $\eta_0$ relative to the viscosity $\eta_1$.

<Surface roughness (Sa)>

An electrode (negative electrode or positive electrode) and a separator produced in each example or comparative example were observed using a laser displacement microscope (produced by Keyence Corporation; model: VK-X1000). An arbitrary 500 $\mu$m-square region was measured for each of the electrode and the separator, and the arithmetic average height was calculated. An average value for the arithmetic average height determined through measurement as described above for a total of 10 locations on the electrode or separator was taken to be the surface roughness (Sa) [$\mu$m] of the electrode or the surface roughness (Sa) [$\mu$m] of the separator.

<Dot diameter and shape of adhesive layer>

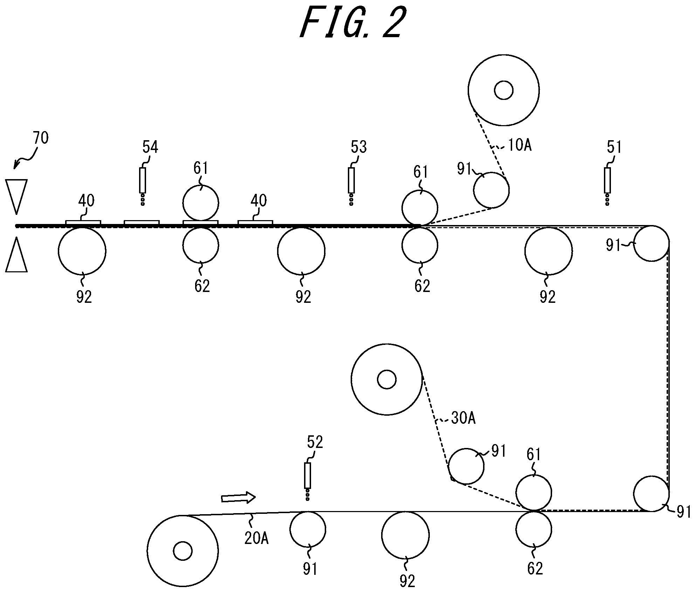

A composition for adhesion produced in each example or comparative example was supplied onto an electrode or separator that was the same as an electrode or separator used as a web 20A illustrated in FIG. 2 in each example or comparative example, and the composition for adhesion was dried under the same conditions as in each example or comparative example to form an adhesive layer. A laser microscope was used to measure the dot diameter of the adhesive layer and to observe the shape of the adhesive layer.

<D90 - Sa>

The difference between the particle size distribution (D90) [$\mu$m] of a composition for adhesion produced in each example or comparative example and the surface roughness (Sa) of an electrode (negative electrode or positive electrode) or a separator used as the web 20A illustrated in FIG. 2 in each example or comparative example was taken to be "D90 - Sa" [μm].

<Remaining proportion of coating liquid>

[C(PET)]

A composition for adhesion produced in each example or comparative example was supplied from an inkjet head of a KM1024 (shear-mode type) in an amount of 1,000 pL onto a polyethylene terephthalate (PET) substrate (surface roughness (Sa) < 0.1 μm; no release treatment). The volume of the composition for adhesion on the PET substrate was measured over time at normal temperature (25°C), and the point at which volume change of the composition for adhesion reached saturation was taken to be the drying completion point.

Next, a laser displacement microscope (produced by Keyence Corporation; model: VK-X1000) was used to perform 3D height measurement for an arbitrary 500 μm-square region of the PET substrate. The position of a baseline of the PET substrate was taken as a reference, the volume of the composition for adhesion protruding further upward than this reference was calculated, and the determined volume was taken to be the remaining amount of coating liquid on the PET substrate.

Measurements were performed in the same manner as described above for a total of 100 locations on the PET substrate, and an average value of the determined remaining amounts of coating liquid was taken to be C(PET).

[C(substrate)]

A composition for adhesion produced in each example or comparative example was supplied from an inkjet head of a KM1024 (shear-mode type) in an amount of 1,000 pL onto an electrode or separator that was the same as an electrode (negative electrode or positive electrode) or separator used as the web 20A illustrated in FIG. 2 in each example or comparative example. The volume of the composition for adhesion on the electrode (negative electrode or positive electrode) or separator was measured over time at normal temperature (25°C). Once the previously described drying completion point was reached, the position of a baseline of the electrode (negative electrode or positive electrode) or separator was taken as a reference, the volume of the composition for adhesion protruding further upward than this reference was calculated by the same method as for "C(PET)" described above, and the determined volume was taken to be the remaining amount of coating liquid on the electrode (negative electrode or positive electrode) or separator.

Measurements were performed in the same manner as described above for a total of 100 locations on the electrode (negative electrode or positive electrode) or separator, and an average value of the determined remaining amounts of coating liquid was taken to be C(substrate).

The determined values of C(substrate) and C(PET) were used to determine a remaining proportion of coating liquid (%) by the following formula (2).

$$\text{Remaining proportion of coating liquid (\%)} = \text{C(substrate)}/\text{C(PET)} \times 100 \cdots \text{Formula (2)}$$

<Inkjet ejection characteristics>

An ejection test was performed for a composition for adhesion produced in each example or comparative example using a high performance head mounted ejection test kit (IJK-200S produced by MICROJET Corporation). Ejection characteristics were evaluated by the following standard.

    A: Ejection possible and possible again even after 5 minutes or more of resting time
    B: Ejection possible but not possible again after 5 minutes of resting time
    C: Ejection not possible

<Adhesiveness between electrode and separator>

For each of Examples 1 to 7 and 10 and Comparative Examples 1 to 3, a composition for adhesion produced in each example or comparative example was supplied onto an electrode (negative electrode or positive electrode) that was the same as an electrode (negative electrode or positive electrode) used as the web 20A illustrated in FIG. 2 under the same conditions as in each example or comparative example. The electrode (negative electrode or positive electrode) onto which the composition for adhesion had been supplied and a separator that was the same as a separator used in each example or comparative example were pressed by pressing rolls (pressure bonding rollers 61 and 62 in FIG. 2 described further below) under pressing conditions of a temperature of 25°C and a line pressure of 20 kgf/cm at a line speed of 1 m/min to perform affixing thereof, and the resultant laminate (i.e., a laminate in which one electrode (negative electrode or positive electrode) and one separator were adhered via an adhesive layer) was cut and sampled prior to being wrapped against a roll (conveying roller 91 in FIG. 2 described further below) so as to obtain a test specimen.

Moreover, for Examples 8 and 9, a composition for adhesion produced in Example 8 or 9 was supplied onto a separator that was the same as a separator used as the web 20A illustrated in FIG. 2 under the same conditions as in Example 8 or 9. The separator onto which the composition for adhesion had been supplied and a negative electrode that was the same as a negative electrode used in Example 8 or 9 were pressed by pressing rolls (pressure bonding rollers 61 and 62 in FIG. 2 described further below) under pressing conditions of a temperature of 25°C and a line pressure of 20 kgf/cm at a line speed of 1 m/min to perform affixing thereof, and the resultant laminate (i.e., a laminate in which one separator and one negative electrode were adhered via an adhesive layer) was cut and sampled prior to being wrapped against a roll (conveying roller 91 in FIG. 2 described further below) so as to obtain a test specimen.

Each of these test specimens was placed with a surface at the current collector-side of the electrode facing downward, and cellophane tape was affixed to the surface at the current collector-side of the electrode. Tape prescribed by JIS Z1522 was used as the cellophane tape. Moreover, the cellophane tape was fixed to a horizontal test stage in advance. The stress when one end of the separator was pulled vertically upward at a pulling speed of 50 mm/min to peel off the separator was measured.

A total of 6 measurements were performed in this manner, an average value of the stress was determined as the peel strength, and adhesiveness (dry adhesiveness) between the electrode and the separator was evaluated by the following standard.

A larger peel strength indicates higher adhesiveness between the electrode and the separator.

A: Peel strength of 5.0 N/m or more
B: Peel strength of not less than 2.0 N/m and less than 5.0 N/m
C: Peel strength of not less than 1.0 N/m and less than 2.0 N/m
D: Peel strength of not less than 0.5 N/m and less than 1.0 N/m

<Lithium deposition rate on negative electrode surface>

A lithium ion secondary battery produced in each example or comparative example was fully charged to a state of charge (SOC) of 100% with a 1C constant current in an environment having a temperature of -10°C. The fully charged secondary battery was disassembled, the negative electrode was removed, and the surface state of a negative electrode mixed material layer of the negative electrode was observed. The area of lithium deposited on the surface of the negative electrode mixed material layer was measured, and the lithium deposition rate on the negative electrode surface was calculated (= (area of deposited lithium/area of surface of negative electrode mixed material layer) × 100(%)). An evaluation was made by the following standard. A lower lithium deposition rate on the negative electrode surface indicates that deposition of lithium on the negative electrode surface during charging is inhibited.

A: Lithium deposition rate of less than 10%
B: Lithium deposition rate of not less than 10% and less than 15%
C: Lithium deposition rate of not less than 15% and less than 20%

<Output characteristics>

A lithium ion secondary battery produced in each example or comparative example was constant-current constant-voltage (CCCV) charged to 4.3 V in an atmosphere having a temperature of 25°C for cell preparation. The prepared cell was discharged to 3.0 V by 0.2C and 1C constant-current methods in an atmosphere having a temperature of -10°C, and the electric capacity was determined for each thereof. A discharge capacity maintenance rate expressed by the ratio of the electric capacities (= (electric capacity at 1C/electric capacity at 0.2C) × 100(%)) was determined. These measurements were performed with respect to 5 lithium ion secondary battery cells, and an average value of the determined discharge capacity maintenance rates was evaluated by the following standard as an output characteristic. A larger value indicates a better output characteristic.

A: Average value for discharge capacity maintenance rate of 80% or more
B: Average value for discharge capacity maintenance rate of not less than 70% and less than 80%
C: Average value for discharge capacity maintenance rate of not less than 60% and less than 70%

(Production Example 1)

<Production of particulate polymer 1>

A reactor including a stirrer was supplied with 100 parts of deionized water and 0.1 parts of ammonium persulfate, the gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 28.3 parts of styrene as an aromatic monovinyl monomer, 66.6 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer. An amount of 1/10 of this monomer composition for core portion formation was continuously added into the reactor over 3 hours, and a polymerization reaction was performed at a temperature of 80°C. The polymerization was continued until the polymerization conversion rate reached 95%, and then 0.2 parts of ammonium persulfate was added, the remaining 9/10 of the monomer composition for core portion formation was continuously added into the reactor over 3 hours, and a polymerization reaction was performed at a temperature of 80°C. Polymerization was continued until a polymerization conversion rate of 95% was reached to yield a water dispersion containing a particulate polymer forming a core portion. Next, a monomer composition for shell portion formation containing 1.3 parts of styrene as an aromatic monovinyl monomer, 0.65 parts of butyl acrylate, and 0.05 parts of methacrylic acid as an acidic group-containing monomer was continuously supplied into this water dispersion over 60 minutes, and polymerization was continued. At the point at which the polymerization conversion rate reached 98%, cooling was performed to quench the reaction to produce a water dispersion containing a particulate polymer 1.
The glass-transition temperature, volume-average particle diameter (D50), and degree of swelling of the obtained particulate polymer 1 were measured. The results are shown in Table 1.
The particulate polymer 1 was confirmed to have a core-shell structure in which a shell portion partially covered an outer surface of a core portion through observation of cross-sectional structure of the particulate polymer 1 using a transmission electron microscope (TEM).

(Production Example 2)

<Production of particulate polymer 2>

A reactor including a stirrer was supplied with 100 parts of deionized water and 0.3 parts of ammonium persulfate, the gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 28.3 parts of styrene as an aromatic monovinyl monomer, 66.6 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer. This monomer composition for core portion formation was continuously added into the reactor over 3 hours, and a polymerization reaction was performed at a temperature of 80°C. Polymerization was continued until a polymerization conversion rate of 95% was reached to yield a water dispersion containing a particulate polymer forming a core portion. Next, a monomer composition for shell portion formation containing 1.3 parts of styrene as an aromatic monovinyl monomer, 0.65 parts of butyl acrylate, and 0.05 parts of methacrylic acid as an acidic group-containing monomer was continuously supplied into the water dispersion over 60 minutes, and polymerization was continued. At the point at which the polymerization conversion rate reached 98%, cooling was performed to quench the reaction to produce a water dispersion containing a particulate polymer 2.
The glass-transition temperature, volume-average particle diameter (D50), and degree of swelling of the obtained particulate polymer 2 were measured. The results are shown in Table 1.
The particulate polymer 2 was confirmed to have a core-shell structure in which a shell portion partially covered an outer surface of a core portion through observation of cross-sectional structure of the particulate polymer 2 using a transmission electron microscope (TEM).

(Production Example 3)

<Production method of particulate polymer 3>

A water dispersion of a particulate polymer 3 having a core-shell structure was produced in the same way as in Production Example 2 with the exception that in production of the particulate polymer in Production Example 2, 0.02 parts of sodium dodecylbenzenesulfonate as an emulsifier was added into the reactor including a stirrer in addition to 100 parts of deionized water and 0.3 parts of ammonium persulfate. Various measurements were performed in the same way as in Production Example 1. The results are shown in Table 1.

(Production Example 4)

<Production of particulate polymer 4>

A reactor including a stirrer was supplied with 90 parts of deionized water and 0.5 parts of ammonium persulfate, the gas phase was purged with nitrogen gas, and the temperature was raised to 80°C. Meanwhile, a monomer composition was obtained in a separate vessel by mixing 15 parts of deionized water, 1.0 parts of NEOPELEX G15 (produced by Kao Corporation) as an emulsifier, 70.0 parts of 2-ethylhexyl acrylate as a monofunctional (meth)acrylic acid ester monomer, 25.0 parts of styrene as an aromatic monovinyl monomer, 1.7 parts of allyl glycidyl ether and 0.3 parts of allyl methacrylate as cross-linkable monomers, and 3.0 parts of acrylic acid as an acidic group-containing monomer.
This monomer composition was continuously added into the reactor over 4 hours to perform polymerization. The reaction was performed at a temperature of 80°C during this continuous addition. Once the continuous addition was complete, a further 3 hours of stirring was performed at a temperature of 80°C, and then the reaction was ended.
The resultant water dispersion was cooled to a temperature of 25°C and was subsequently adjusted to pH 8.0 through addition of sodium hydroxide aqueous solution. Thereafter, unreacted monomer was removed through introduction of steam to yield a water dispersion of a particulate polymer 4 that did not have a core-shell structure. Various measurements were performed in the same way as in Production Example 1. The results are shown in Table 1.

[Table 1]

| | | | Production Example 1 | Production Example 2 | Production Example 3 | Production Example 4 |
|---|---|---|---|---|---|---|
| Type of particulate polymer | | | Particulate polymer 1 | Particulate polymer 2 | Particulate polymer 3 | Particulate polymer 4 |
| Chemical composition [mass%] | Core portion | 2EHA | 66.6 | 66.6 | 66.6 | 70 |
| | | St | 28.3 | 28.3 | 28.3 | 25 |
| | | MAA | 3 | 3 | 3 | - |
| | | AA | - | - | - | 3 |
| | | AGE | - | - | - | 1.7 |
| | | AMA | - | - | - | 0.3 |
| | | EDMA | 0.1 | 0.1 | 0.1 | |
| | Shell portion | St | 1.3 | 1.3 | 1.3 | - |
| | | BA | 0.65 | 0.65 | 0.65 | |
| | | MAA | 0.05 | 0.05 | 0.05 | |
| Mass ratio (core portion/shell portion) | | | 98/2 | 98/2 | 98/2 | - |
| Glass-transition temperature [°C] | Core portion | | -18 | -18 | -18 | -25 |
| | Shell portion | | 53 | 53 | 53 | |
| Volume-average particle diameter (D50) [nm] | | | 900 | 700 | 270 | 200 |

(continued)

|  | Production Example 1 | Production Example 2 | Production Example 3 | Production Example 4 |
|---|---|---|---|---|
| Type of particulate polymer | Particulate polymer 1 | Particulate polymer 2 | Particulate polymer 3 | Particulate polymer 4 |
| Degree of swelling [%] | 170 | 170 | 170 | 170 |

[0120] Note that in Table 1:
"2EHA" indicates 2-ethylhexyl acrylate;
"St" indicates styrene;
"MAA" indicates methacrylic acid;
"AA" indicates acrylic acid;
"AGE" indicates allyl glycidyl ether;
"AMA" indicates allyl methacrylate;
"EDMA" indicates ethylene glycol dimethacrylate; and
"BA" indicates butyl acrylate.

<Production of negative electrode web>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to a temperature of 50°C to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to a temperature of 30°C or lower to obtain a water dispersion containing the target binder for a negative electrode mixed material layer.

Next, 100 parts of artificial graphite (volume-average particle diameter: 15.6 $\mu$m) as a negative electrode active material, 1 part in terms of solid content of a 2% aqueous solution of carboxymethyl cellulose sodium salt (produced by Nippon Paper Industries Co., Ltd.; product name: MAC350HC) as a viscosity modifier, and deionized water were mixed, were adjusted to a solid content concentration of 68%, and were then further mixed at a temperature of 25°C for 60 minutes. The solid content concentration was further adjusted to 62% with deionized water and then a further 15 minutes of mixing was performed at a temperature of 25°C. Deionized water and 1.5 parts in terms of solid content of the water dispersion containing the binder for a negative electrode mixed material layer described above were added to the resultant mixture, the final solid content concentration was adjusted to 52%, and a further 10 minutes of mixing was performed. The resultant mixture was subjected to a defoaming process under reduced pressure to yield a slurry composition for a secondary battery negative electrode having good fluidity.

The obtained slurry composition for a secondary battery negative electrode was applied onto both surfaces of copper foil of 20 $\mu$m in thickness serving as a current collector using a comma coater such as to have a thickness after drying of approximately 150 $\mu$m. The applied slurry composition was dried by conveying the copper foil inside an oven having a temperature of 60°C for 2 minutes at a speed of 0.5 m/min. Thereafter, 2 minutes of heat treatment was performed at a temperature of 120°C to obtain a pre-pressing negative electrode web.

The pre-pressing negative electrode web was rolled by roll pressing to obtain the following four types of post-pressing negative electrode webs as post-pressing negative electrode webs.

Negative electrode (1) web (negative electrode mixed material layer thickness: 95 $\mu$m; surface roughness (Sa): 0.5 $\mu$m)

Negative electrode (2) web (negative electrode mixed material layer thickness: 88 $\mu$m; surface roughness (Sa): 0.3 $\mu$m)

Negative electrode (3) web (negative electrode mixed material layer thickness: 100 $\mu$m; surface roughness (Sa): 0.8 $\mu$m)

Negative electrode (4) web (negative electrode mixed material layer thickness: 103 $\mu$m; surface roughness (Sa): 1.0 $\mu$m)

<Production of positive electrode web>

A slurry composition for a secondary battery positive electrode was obtained by mixing 100 parts of $LiCoO_2$ having a volume-average particle diameter of 12 $\mu$m as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting these materials to a total solid content concentration of 70%, and mixing these materials using a planetary mixer.

The obtained slurry composition for a secondary battery positive electrode was applied onto both surfaces of aluminum foil of 20 $\mu$m in thickness serving as a current collector using a comma coater such as to have a thickness after drying of approximately 150 $\mu$m. This applied slurry composition was dried by conveying the aluminum foil inside an oven having a temperature of 60°C for 2 minutes at a speed of 0.5 m/min. Thereafter, 2 minutes of heat treatment was performed at a temperature of 120°C to obtain a positive electrode web.

The obtained positive electrode web was rolled by a roll press to obtain a post-pressing positive electrode web (surface roughness (Sa): 0.2 $\mu$m) including positive electrode mixed material layers.

<Preparation of separator web>

A separator web (ND412 (product name) produced by Asahi Kasei Corporation; surface roughness (Sa): 0.2 $\mu$m) made of polyethylene (PE) was prepared.

(Example 1)

<Production of composition for adhesion>

The water dispersion of the particulate polymer 1 as a particulate polymer A having a core-shell structure and a volume-average particle diameter (D50) of 500 nm or more and the water dispersion of the particulate polymer 3 as a particulate polymer B having a core-shell structure and a volume-average particle diameter (D50) of less than 500 nm were compounded such that a mass ratio of amounts of solid content (particulate polymer A:particulate polymer B) was 20:80, the water dispersion of the particulate polymer 4 as a particulate polymer C not having a core-shell structure was further mixed therewith such that a mass ratio of amounts of solid content (total of particulate polymers A and B:particulate polymer C) was 100:10, and deionized water was further added to perform dilution to a solid content concentration of 10.5%. Propylene glycol was further added to the resultant mixture so as to adjust the solid content concentration to 10% and obtain a composition for adhesion.

The obtained composition for adhesion was used to measure and evaluate the particle size distribution of the composition for adhesion, slurry physical properties of the composition for adhesion, the shape of an adhesive layer, D90 - Sa, the remaining proportion of coating liquid, inkjet ejection characteristics, and adhesiveness between an electrode and a separator. The results are shown in Table 2.

<Production of laminate>

The produced composition for adhesion, negative electrode web, positive electrode web, and separator web were used to produce a laminate as illustrated in FIG. 2.

Specifically, the negative electrode (1) web as a web 20A fed from a web roll was conveyed at a speed of 10 m/min while the composition for adhesion was supplied onto one surface of the web 20A from an inkjet head of an inkjet-type coating machine 52 (KM1024 (shear-mode type) produced by Konica) and a separator as a separator web 30A fed from a web roll was affixed to the web 20A by pressure bonding rollers 61 and 62. The composition for adhesion was also supplied onto the other surface of the web 20A from an inkjet head of an inkjet-type coating machine 51 (KM1024 (shear-mode type) produced by Konica), and a separator as a web 10A fed from a web roll was affixed to the laminate of the web 20A and the web 30A by pressure bonding rollers 61 and 62. The composition for adhesion was also supplied onto a surface at the opposite side of the web 10A to the side corresponding to the web 20A from an inkjet head of an inkjet-type coating machine 53 (KM1024 (shear-mode type) produced by Konica), a positive electrode as a substrate that had been pre-cut was placed thereon, and then the substrate 40 was affixed to the laminate of the web 10A, the web 20A, and the web 30A by pressure bonding rollers 61 and 62. Moreover, the composition for adhesion was supplied onto the substrate 40 from an inkjet head of an inkjet-type coating machine 54 (KM1024 (shear-mode type) produced by Konica), and then cutting was performed by a cutting machine 70 to obtain a laminate in which a separator, a negative electrode (1), a separator, and a positive electrode were stacked in this order. Note that a section where an electrode mixed material layer (positive electrode mixed material layer or negative electrode mixed material layer) was not formed was provided at an edge part of the current collector of each of the substrate 40 and the web 20, punching was performed such that a tab of a desired size was formed in advance, and stacking was performed such that a positive electrode tab and a negative electrode tab were disposed at the same edge side of affixing surfaces X and Y (surface Z) of the electrodes and separators.

Note that affixing using pressure bonding rollers 61 and 62 was performed at a temperature of 25°C and a pressure of 2 MPa.

Moreover, the supplied composition for adhesion was dried by using heating rollers 92 for some of conveying rollers 91. The drying temperature was 90°C, and the drying time was 1 second.

Furthermore, supply of the composition for adhesion from the inkjet heads was adjusted such that an adhesive layer obtained through drying of the adhesive layer composition was arranged in a dotted pattern and such that the dot diameter was 400 μm and the interval between dots was 400 μm pitch.

<Production of secondary battery>

A stack was produced by stacking five laminates obtained as described above and performing 10 seconds of pressing at a temperature of 70°C and a pressure of 1 MPa, this stack was enclosed in an aluminum packing case serving as a case, and then electrolyte solution (solvent: ethylene carbonate/diethyl carbonate/vinylene carbonate = 68.5/30/1.5 (volume ratio); electrolyte: $LiPF_6$ of 1 M in concentration) was injected. An opening of the aluminum packing case was subsequently closed by heat sealing at a temperature of 150°C to produce a stacked lithium ion secondary battery having a capacity of 800 mAh. The obtained secondary battery was used to evaluate the lithium deposition rate on a negative electrode surface and output characteristics. The results are shown in Table 2.

(Example 2)

A composition for adhesion, a laminate, and a secondary battery were produced in the same way as in Example 1 with the exception that in production of the composition for adhesion, the mass ratio (particulate polymer A:particulate polymer B) of amounts of solid content of the particulate polymer A having a core-shell structure and the particulate polymer B having a core-shell structure was changed to 10:90. Various measurements and evaluations were performed in the same way as in Example 1. The results are shown in Table 2.

(Example 3)

A composition for adhesion, a laminate, and a secondary battery were produced in the same way as in Example 1 with the exception that in production of the composition for adhesion, the mass ratio (particulate polymer A:particulate polymer B) of amounts of solid content of the particulate polymer A having a core-shell structure and the particulate polymer B having a core-shell structure was changed to 30:70. Various measurements and evaluations were performed in the same way as in Example 1. The results are shown in Table 2.

(Example 4)

A composition for adhesion, a laminate, and a secondary battery were produced in the same way as in Example 1 with the exception that in production of the composition for adhesion, a particulate polymer B having a core-shell structure and a volume-average particle diameter (D50) of less than 500 nm was not used. Various measurements and evaluations were performed in the same way as in Example 1. The results are shown in Table 2.

(Example 5)

A composition for adhesion, a laminate, and a secondary battery were produced in the same way as in Example 4 with the exception that in production of the composition for adhesion, the water dispersion of the particulate polymer 2 obtained in Production Example 2 was used as a particulate polymer A having a core-shell structure and a volume-average particle diameter (D50) of 500 nm or more. Various measurements and evaluations were performed in the same way as in Example 1. The results are shown in Table 2.

(Example 6)

A composition for adhesion, a laminate, and a secondary battery were produced in the same way as in Example 2 with the exception that in production of the laminate, the negative electrode (2) web having a surface roughness (Sa) of 0.3 μm that was produced as previously described was used as the web 20A illustrated in FIG. 2 instead of the negative electrode (1) web having a surface roughness (Sa) of 0.5 μm. Various measurements and evaluations were performed in the same way as in Example 1. The results are shown in Table 3.

(Example 7)

A composition for adhesion and a secondary battery were produced in the same way as in Example 2 with the exception that in production of the secondary battery, a laminate produced as described below was used as a laminate. Various measurements and evaluations were performed in the same way as in Example 1. The results are shown in Table 3.

<Production of laminate>

A laminate having a separator, a positive electrode, a separator, and a negative electrode stacked in this order was obtained by performing operations in the same way as in Example 1 with the exception that in production of the laminate, the positive electrode web having a surface roughness (Sa) of 0.2 μm that was produced as previously described was used as the web 20A illustrated in FIG. 2 instead of the negative electrode (1) web having a surface roughness (Sa) of 0.5 μm, and a negative electrode (1) formed from the negative electrode (1) web was used as the substrate 40 instead of a positive electrode.

(Example 8)

A composition for adhesion and a secondary battery were produced in the same way as in Example 2 with the exception that in production of the secondary battery, a laminate produced as described below was used as a laminate. Various measurements and evaluations were performed in the same way as in Example 1. The results are shown in Table 3.

<Production of laminate>

A laminate in which a negative electrode (1), a separator, a positive electrode, and a separator were stacked in this order was obtained by performing operations in the same way as in Example 1 with the exception that in production of the laminate, the separator having a surface roughness (Sa) of 0.2 μm that was prepared as previously described was used as the web 20A illustrated in FIG. 2 instead of the negative electrode (1) web having a surface roughness (Sa) of 0.5 μm, the negative electrode (1) web produced as previously described was used as the web 30A instead of a separator, the positive electrode web produced as previously described was used as the web 10A instead of a separator, and the separator prepared as previously described was used as the substrate 40.

(Example 9)

A composition for adhesion, a laminate, and a secondary battery were produced in the same way as in Example 8 with the exception that in production of the laminate, the drying temperature of the supplied composition for adhesion was changed to 50°C. Various measurements and evaluations were performed in the same way as in Example 1. The results are shown in Table 3.

(Example 10)

A composition for adhesion, a laminate, and a secondary battery were produced in the same way as in Example 2 with the exception that in production of the laminate, the negative electrode (3) web having a surface roughness (Sa) of 0.8 μm that was produced as previously described was used as the web 20A illustrated in FIG. 2 instead of the negative electrode (1) web having a surface roughness (Sa) of 0.5 μm. Various measurements and evaluations were performed in the same way as in Example 1. The results are shown in Table 3.

(Comparative Example 1)

A composition for adhesion produced as described below was used as a composition for adhesion instead of the composition for adhesion used in Example 1. Moreover, in production of a laminate, the negative electrode (4) web having a surface roughness (Sa) of 1.0 μm that was produced as previously described was used as the web 20A illustrated in FIG. 2 instead of the negative electrode (1) web having a surface roughness (Sa) of 0.5 μm. With the exception of the above, a laminate and a secondary battery were produced in the same way as in Example 1. Various measurements and evaluations were performed in the same way as in Example 1. The results are shown in Table 4.

<Production of composition for adhesion>

In production of the composition for adhesion, the water dispersion of the particulate polymer 3 as a particulate polymer having a core-shell structure and the particulate polymer 4 as a particulate polymer not having a core-shell structure were mixed such that a mass ratio of amounts of solid content (particulate polymer 3:particulate polymer 4) was 100:10 to yield a mixture containing the particulate polymers. With the exception that this mixture was used, operations were performed in the same way as in Example 1 to obtain a composition for adhesion.

(Comparative Example 2)

A laminate and a secondary battery were produced in the same way as in Comparative Example 1 with the exception that a composition for adhesion produced as described below was used as a composition for adhesion instead of the composition for adhesion used in Example 1. Various measurements and evaluations were performed in the same way as in Example 1. The results are shown in Table 4.

<Production of composition for adhesion>

The water dispersion of the particulate polymer 3 as a particulate polymer A having a core-shell structure and the water dispersion of the particulate polymer 4 as a particulate polymer C not having a core-shell structure were mixed such that a mass ratio of amounts of solid content (particulate polymer A:particulate polymer C) was 100:10, a cellulose nanofiber water dispersion (WFo-1002 produced by Sugino Machine Limited) as a thixotropic agent was subsequently mixed therewith such that a mass ratio of amounts of solid content of the particulate polymer A and the thixotropic agent (particulate polymer A:thixotropic agent) was 100:0.1, and stirring was performed. In addition, deionized water was added so as to perform dilution to a solid content concentration of 10.5%. Propylene glycol was further added to the resultant mixture to adjust the solid content concentration to 10% and obtain a composition for adhesion.

(Comparative Example 3)

A composition for adhesion, a laminate, and a secondary battery were produced in the same way as in Comparative Example 2 with the exception that in production of the laminate, inkjet head adjustment was performed such that the dot diameter of an adhesive layer obtained through drying of the composition for adhesion was 180 $\mu$m. Various measurements were performed in the same way as in Example 1. The results are shown in Table 4.

[Table 2]

| | | | | Example 1 | Example 2 | Example 3 | Example 4 | Example 5 |
|---|---|---|---|---|---|---|---|---|
| Laminate for non-aqueous secondary battery | Composition adhesion for adhesion | Particulate polymer having core-shell structure | Particulate polymer A | Particulate polymer 1 | Particulate polymer 1 | Particulate polymer 1 | Particulate polymer 1 | Particulate polymer 2 |
| | | | Particulate polymer B | Particulate polymer 3 | Particulate polymer 3 | Particulate polymer 3 | - | - |
| | | | Mass ratio of amounts of solid content (particulate polymer A: particulate polymer B) | 20:80 | 10:90 | 30:70 | - | - |
| | | Particulate polymer not having core-shell structure | Particulate polymer C | Particulate polymer 4 | Particulate polymer 4 | Particulate polymer 4 | Particulate polymer 4 | Particulate polymer 4 |
| | | Particle size distribution | D50 [nm] | 330 | 310 | 360 | 900 | 700 |
| | | | D90 [nm] | 740 | 620 | 780 | 940 | 750 |
| | | Slurry physical properties | Viscosity $\eta_0$ at shear rate of 100 $s^{-1}$ [mPa·s] | 2.5 | 2.7 | 2.4 | 2 | 2.7 |
| | | | Viscosity $\eta_1$ at shear rate of 10,000 $s^{-1}$ [mPa·s] | 2.2 | 2.3 | 2.2 | 1.8 | 2.4 |
| | | | Ratio ($\eta_0/\eta_1$) of viscosity $\eta_0$ relative to viscosity $\eta_1$ [-] | 1.14 | 1.17 | 1.09 | 1.11 | 1.13 |
| | Web 20A illustrated in FIG. 2 | | Type | Negative electrode | Negative electrode | Negative electrode | Negative electrode | Negative electrode |
| | | | Surface roughness (Sa) [μm] | 0.5 | 0.5 | 0.5 | 0.5 | 0.5 |
| | Supply conditions | | Supply method | Inkjet | Inkjet | Inkjet | Inkjet | Inkjet |
| | | | Supply pattern | Dotted | Dotted | Dotted | Dotted | Dotted |
| | Adhesive layer | | Dot diameter [μm] | 400 | 400 | 400 | 400 | 400 |
| | | | Drying temperature [°C] | 90 | 90 | 90 | 90 | 90 |
| | | | Dot shape | Crater | Crater | Crater | Crater | Crater |
| | D90 - Sa [μm] | | | 0.24 | 0.12 | 0.28 | 0.44 | 0.25 |
| | Remaining proportion of coating liquid [%] | | | 90 | 75 | 100 | 100 | 93 |

(continued)

| | | Example 1 | Example 2 | Example 3 | Example 4 | Example 5 |
|---|---|---|---|---|---|---|
| Evaluation | Inkjet ejection characteristics | A | A | B | C | B |
| | Adhesiveness between electrode and separator | A | B | A | A | A |
| | Lithium deposition on negative electrode surface | A | A | A | A | A |
| | Output characteristics | A | A | A | A | A |

[Table 3]

| | | | | Example 6 | Example 7 | Example 8 | Example 9 | Example 10 |
|---|---|---|---|---|---|---|---|---|
| Laminate for non-aqueous secondary battery | Composition for adhesion | Particulate polymer having core-shell structure | Particulate polymer A | Particulate polymer 1 | Particulate polymer 1 | Particulate polymer 1 | Particulate polymer 1 | Particulate polymer 1 |
| | | | Particulate polymer B | Particulate polymer 3 | Particulate polymer 3 | Particulate polymer 3 | Particulate polymer 3 | Particulate polymer 3 |
| | | | Mass ratio of amounts of solid content (particulate polymer A:particulate polymer B) | 10:90 | 10:90 | 10:90 | 10:90 | 10:90 |
| | | Particulate polymer not having core-shell structure | Particulate polymer C | Particulate polymer 4 | Particulate polymer 4 | Particulate polymer 4 | Particulate polymer 4 | Particulate polymer 4 |
| | | Particle size distribution | D50 [nm] | 310 | 310 | 310 | 310 | 310 |
| | | | D90 [nm] | 620 | 620 | 620 | 620 | 620 |
| | | Slurry physical properties | Viscosity $\eta_0$ at shear rate of 100 s$^{-1}$ [mPa·s] | 2.7 | 2.7 | 2.7 | 2.7 | 2.7 |
| | | | Viscosity $\eta_1$ at shear rate of 10,000 s$^{-1}$ [mPa·s] | 2.3 | 2.3 | 2.3 | 2.3 | 2.3 |
| | | | Ratio ($\eta_0/\eta_1$) of viscosity $\eta_0$ relative to viscosity $\eta_1$ [-] | 1.17 | 1.17 | 1.17 | 1.17 | 1.17 |
| | Web 20A illustrated in FIG. 2 | | Type | Negative electrode | Positive electrode | Separator | Separator | Negative electrode |
| | | | Surface roughness (Sa) [μm] | 0.3 | 0.2 | 0.2 | 0.2 | 0.8 |
| | Supply conditions | | Supply method | Inkjet | Inkjet | Inkjet | Inkjet | Inkjet |
| | | | Supply pattern | Dotted | Dotted | Dotted | Dotted | Dotted |
| | Adhesive layer | | Dot diameter [μm] | 400 | 400 | 400 | 400 | 400 |
| | | | Drying temperature [°C] | 90 | 90 | 90 | 50 | 90 |
| | | | Dot shape | Crater | Crater | Crater | Crater | Crater |
| | D90 - Sa [μm] | | | 0.32 | 0.42 | 0.42 | 0.42 | -0.18 |
| | Remaining proportion of coating liquid [%] | | | 100 | 100 | 100 | 95 | 30 |

(continued)

| | | Example 6 | Example 7 | Example 8 | Example 9 | Example 10 |
|---|---|---|---|---|---|---|
| Evaluation | Inkjet ejection characteristics | A | A | A | A | A |
| | Adhesiveness between electrode and separator | A | A | A | A | B |
| | Lithium deposition on negative electrode surface | A | A | B | A | B |
| | Output characteristics | A | A | B | A | B |

[Table 4]

| | | | | Comparative Example 1 | Comparative Example 2 | Comparative Example 3 |
|---|---|---|---|---|---|---|
| Laminate for non-aqueous secondary battery | Composition for adhesion | Particulate polymer having core-shell structure | Particulate polymer A | - | - | - |
| | | | Particulate polymer B | Particulate polymer 3 | Particulate polymer 3 | Particulate polymer 3 |
| | | | Mass ratio of amounts of solid content (particulate polymer A: particulate polymer B) | - | - | - |
| | | Particulate polymer not having core-shell structure | Particulate polymer C | Particulate polymer 4 | Particulate polymer 4 | Particulate polymer 4 |
| | | Particle size distribution | D50 [nm] | 270 | 270 | 270 |
| | | | D90 [nm] | 330 | 330 | 330 |
| | | Slurry physical properties | Viscosity $\eta_0$ at shear rate of 100 s$^{-1}$ [mPa·s] | 2.9 | 8 | 8 |
| | | | Viscosity $\eta_1$ at shear rate of 10,000 s$^{-1}$ [mPa·s] | 2.5 | 2.5 | 2.5 |
| | | | Ratio ($\eta_0/\eta_1$) of viscosity $\eta_0$ relative to viscosity $\eta_1$ [-] | 1.16 | 3.20 | 3.20 |
| | Web 20A illustrated in FIG. 2 | | Type | Negative electrode | Negative electrode | Negative electrode |
| | | | Surface roughness (Sa) [$\mu$m] | 1.0 | 1.0 | 1.0 |
| | Supply conditions | | Supply method | Inkjet | Inkjet | Inkjet |
| | | | Supply pattern | Dotted | Dotted | Dotted |
| | Adhesive layer | | Dot diameter [$\mu$m] | 400 | 400 | 180 |
| | | | Drying temperature [°C] | 90 | 90 | 90 |
| | | | Dot shape | Crater | Cylindrical | Cylindrical |
| | D90 - Sa [$\mu$m] | | | -0.67 | -0.67 | -0.67 |
| | Remaining proportion of coating liquid [%] | | | 0 | 15 | 15 |
| Evaluation | | | Inkjet ejection characteristics | A | A | A |
| | | | Adhesiveness between electrode and separator | D | C | C |
| | | | Lithium deposition on negative electrode surface | C | B | A |
| | | | Output characteristics | C | A | A |

It can be seen from Tables 2 and 3 that the laminates of Examples 1 to 10 have strong adhesion between an electrode and a separator and are capable of forming a secondary battery having excellent output characteristics. Moreover, it can be seen from Table 4 that the laminate of Comparative Example 1 for which the remaining proportion of coating liquid is 0% and "D90 - Sa" is less than -0.25 does not have strong adhesion between an electrode and a separator and cannot form a secondary battery having excellent output characteristics. Furthermore, it can be seen that the laminates of Comparative Examples 2 and 3 for which the remaining proportion of coating liquid is 15% and "D90 - Sa" is less than -0.25 do not have strong adhesion between an electrode and a separator.

INDUSTRIAL APPLICABILITY

According to the present disclosure, it is possible to provide a laminate for a non-aqueous secondary battery that has strong adhesion between an electrode and a separator and is capable of forming a non-aqueous secondary battery having excellent output characteristics.

Moreover, according to the present disclosure, it is possible to provide a composition for adhesion that can suitably be used as a material forming an adhesive layer of the presently disclosed laminate for a non-aqueous secondary battery.

Furthermore, according to the present disclosure, it is possible to provide a non-aqueous secondary battery having excellent battery characteristics such as output characteristics.

REFERENCE SIGNS LIST

| 1 | adhesive layer |
| 2 | current collector |
| 3 | negative electrode mixed material layer |
| 10A | web |
| 20A | web |
| 30A | web |
| 40 | substrate |
| 51-54 | coating machine (nozzle head) |
| 61, 62 | pressure bonding roller |
| 70 | cutting machine |
| 91 | conveying roller |
| 92 | heating roller |

**Claims**

1. A laminate for a non-aqueous secondary battery comprising an electrode and a separator that are adhered via an adhesive layer, wherein

   the adhesive layer is a dried product of a composition for adhesion that contains a particulate polymer, and a relationship between the composition for adhesion and at least one of the electrode and the separator satisfies formula (1), shown below,

   $$20 \leq \text{remaining proportion of coating liquid (\%)} \leq 100 \cdots \text{formula (1)}$$

   where, in formula (1), remaining proportion of coating liquid (%) is determined by formula (2), shown below,

   $$\text{remaining proportion of coating liquid (\%)} = C(\text{substrate})/C(\text{PET}) \times 100 \cdots \text{formula (2)}$$

   where, in formula (2): C(PET) is volume of the composition for adhesion remaining on a polyethylene terephthalate substrate at a drying completion point at which volume change of the composition for adhesion reaches saturation when volume change of the composition for adhesion on the polyethylene terephthalate substrate is measured over time after 1,000 pL of the composition for adhesion is dripped onto the polyethylene terephthalate substrate; and C(substrate) is volume of the composition for adhesion remaining on the electrode or the separator when the drying completion point is reached after 1,000 pL of the composition for adhesion is dripped onto the electrode or the separator.

2. A laminate for a non-aqueous secondary battery comprising an electrode and a separator that are adhered via an adhesive layer, wherein

the adhesive layer is a dried product of a composition for adhesion that contains a particulate polymer, and a relationship between a particle size distribution (D90) of the composition for adhesion and at least one of surface roughness (Sa) of the electrode and surface roughness (Sa) of the separator satisfies formula (3), shown below,

$$\text{particle size distribution (D90) of composition for adhesion [μm]} -$$
$$\text{surface roughness (Sa) of electrode [μm] or surface roughness (Sa) of separator}$$
$$\text{[μm]} > -0.25 \cdots \text{formula (3)}.$$

3. The laminate for a non-aqueous secondary battery according to claim 1 or 2, wherein the adhesive layer is formed of a plurality of dot-like adhesive layers, dot diameter per one of the dot-like adhesive layers is 200 μm or more, and the dot-like adhesive layers have a crater-like uneven shape.

4. A composition for adhesion comprising a particulate polymer and used for the laminate for a non-aqueous secondary battery according to any one of claims 1 to 3, wherein the particulate polymer has a core-shell structure including a core portion and a shell portion partially covering an outer surface of the core portion.

5. The composition for adhesion according to claim 4 that comprises a particulate polymer and is used for the laminate for a non-aqueous secondary battery according to any one of claims 1 to 3, wherein the particulate polymer includes two or more particulate polymers having different volume-average particle diameters, and at least one of the particulate polymers has the core-shell structure.

6. A non-aqueous secondary battery comprising the laminate for a non-aqueous secondary battery according to any one of claims 1 to 3.

# FIG. 1A

# FIG. 1B

FIG. 2

EP 4 333 093 A1

## INTERNATIONAL SEARCH REPORT

| International application No. |
|---|
| **PCT/JP2022/016947** |

**A. CLASSIFICATION OF SUBJECT MATTER**

*H01M 4/13*(2010.01)i; *H01M 50/443*(2021.01)i; *H01M 50/449*(2021.01)i; *H01M 50/463*(2021.01)i; *H01M 50/489*(2021.01)i
FI: H01M50/449; H01M50/443 B; H01M50/443 E; H01M50/463 A; H01M50/489; H01M4/13

According to International Patent Classification (IPC) or to both national classification and IPC

**B. FIELDS SEARCHED**

Minimum documentation searched (classification system followed by classification symbols)

H01M50/40-50/497; H01M4/13

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-510472 A (SK INNOVATION CO., LTD.) 12 April 2018 (2018-04-12) paragraphs [0008], [0082]-[0083], [0086], [0088]-[0093], example 1, table 1 | 1-2, 6 |
| Y | | 3-5 |
| X | JP 2012-049052 A (HITACHI LTD) 08 March 2012 (2012-03-08) paragraphs [0015]-[0016], [0083]-[0091], [0094], [0105], example 3, table 1 | 1-2, 6 |
| Y | JP 2017-183229 A (ASAHI KASEI CORP) 05 October 2017 (2017-10-05) paragraph [0016] | 3 |
| Y | JP 2019-008884 A (ASAHI KASEI CORP) 17 January 2019 (2019-01-17) paragraph [0054] | 4-5 |
| Y | WO 2018/198940 A1 (ZEON CORPORATION) 01 November 2018 (2018-11-01) paragraphs [0008]-[0009] | 4-5 |
| A | WO 2013/146515 A1 (ZEON CORPORATION) 03 October 2013 (2013-10-03) examples 1-15, tables 1-10 | 1-6 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/016947**

C.      DOCUMENTS CONSIDERED TO BE RELEVANT

| Category* | Citation of document, with indication, where appropriate, of the relevant passages | Relevant to claim No. |
|---|---|---|
| A | WO 2013/147006 A1 (ZEON CORPORATION) 03 October 2013 (2013-10-03) examples 1-5, 7-14, table 1 | 1-6 |
| A | KR 10-2019-0128440 A (SAMSUNG SDI CO., LTD.) 18 November 2019 (2019-11-18) paragraphs [0015]-[0016], [0034]-[0035], [0039]-[0040], fig. 1, table 1 | 1-6 |

Form PCT/ISA/210 (second sheet) (January 2015)

**INTERNATIONAL SEARCH REPORT**
Information on patent family members

International application No.

**PCT/JP2022/016947**

| Patent document cited in search report | | | Publication date (day/month/year) | Patent family member(s) | Publication date (day/month/year) |
|---|---|---|---|---|---|
| JP | 2018-510472 | A | 12 April 2018 | US 2018/0114968 A1 paragraphs [0008], [0089]-[0092], [0097]-[0098], [0101]-[0109], example 1, table 1 US 2018/0097216 A1 WO 2016/159724 A1 WO 2016/159720 A1 KR 10-2016-0118966 A KR 10-2016-0118986 A CN 107438912 A CN 107534117 A | |
| JP | 2012-049052 | A | 08 March 2012 | (Family: none) | |
| JP | 2017-183229 | A | 05 October 2017 | (Family: none) | |
| JP | 2019-008884 | A | 17 January 2019 | (Family: none) | |
| WO | 2018/198940 | A1 | 01 November 2018 | US 2020/0127263 A1 paragraphs [0013]-[0014] EP 3618144 A1 CN 110557970 A KR 10-2019-0137818 A | |
| WO | 2013/146515 | A1 | 03 October 2013 | US 2015/0072213 A1 examples 1-15, tables 1-10 EP 2833437 A1 CN 104170121 A KR 10-2014-0144182 A | |
| WO | 2013/147006 | A1 | 03 October 2013 | (Family: none) | |
| KR | 10-2019-0128440 | A | 18 November 2019 | US 2021/0184314 A1 paragraphs [0029]-[0030], [0048]-[0049], [0053]-[0054], fig. 1, table 1 WO 2019/216548 A1 EP 3792995 A1 CN 112088447 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019221056 A1
- WO 2020045246 A1
- JP 2013145763 A
- JP 2012204303 A
- WO 2012115096 A1